(19) Europäisches Patentamt
European Patent Office
Office européen des brevets

(11) **EP 1 728 177 B1**

(12) **EUROPEAN PATENT SPECIFICATION**

(45) Date of publication and mention
of the grant of the patent:
**22.07.2009 Bulletin 2009/30**

(51) Int Cl.:
***G06F 17/28*** *(2006.01)*

(21) Application number: **05718056.4**

(22) Date of filing: **17.03.2005**

(86) International application number:
**PCT/GB2005/001010**

(87) International publication number:
**WO 2005/093600 (06.10.2005 Gazette 2005/40)**

(54) **INDUCTION OF GRAMMAR RULES**

INDUKTION VON GRAMMATIKREGELN

INDUCTION DE REGLES GRAMMATICALES

(84) Designated Contracting States:
**AT BE BG CH CY CZ DE DK EE ES FI FR GB GR HU IE IS IT LI LT LU MC NL PL PT RO SE SI SK TR**

(30) Priority: **24.03.2004 GB 0406619**

(43) Date of publication of application:
**06.12.2006 Bulletin 2006/49**

(73) Proprietor: **BRITISH TELECOMMUNICATIONS public limited company**
**London EC1A 7AJ (GB)**

(72) Inventor: **APPLEBY, Stephen, Clifford**
**Essex C07 9JU (GB)**

(56) References cited:
- **M. CARL, D. WU: "Inferring Maximally Invertible Bi-grammars for Example-Based Machine Translation" November 1999 (1999-11), , NLPRS 1999. BEIJING, CHINA. , XP002384886 abstract page 1, right-hand column, lines 23-40 page 2, left-hand column, lines 30-40 page 2, right-hand column, lines 10-51**
- **P. LANGLEY, S. STROMSTEN: "Learning Context-Free Grammars with a Simplicity Bias" June 2000 (2000-06), SPRINGER-VERLAG , PROCEEDINGS OF THE 11TH EUROPEAN CONFERENCE ON MACHINE LEARNING, BARCELONA, SPAIN, PAGES 220 - 227 , XP002384887 ISBN: 3-540-67602-3 abstract page 221, lines 8-25 page 223, lines 1-26**
- **P. GRÜNWALD: "A minimum description length approach to grammar inference" 1996, SPRINGER-VERLAG , LECTURE NOTES IN COMPUTER SCIENCE; VOL. 1040 , XP002384888 ISBN: 3-540-60925-3 abstract page 2, lines 9-19 page 2, lines 28-34 - page 3 figure 1**
- **GUEVENIR H A ET AL: "LEARNING TRANSLATION TEMPLATES FROM EXAMPLES" INFORMATION SYSTEMS, PERGAMON PRESS, OXFORD, GB, vol. 23, no. 6, September 1998 (1998-09), pages 353-363, XP008001269 ISSN: 0306-4379**
- **CHUNYU KIT: "A Goodness Measure for Phrase Learning via Compression with the MDL Principle" 1998, , PROCEEDINGS OF THE THIRD ESSLLI STUDENT SESSION, SAARBRÜCKEN, GERMANY , XP002384889 abstract page 176, line 39 - page 178, line 9**

**Description**

BACKGROUND OF THE INVENTION

1. Field of the invention

The present invention lies in the field of machine translation (MT) and relates particularly, but not exclusively, to a method of and an apparatus for generating, by automatic induction, a set of grammar rules for a given language, herein referred to, respectively, as the grammar rule induction method and the grammar rule induction apparatus, and also to a method of and an apparatus for generating, by automatic induction, a set of bilingual grammar rule pairs for a given pair of languages.

2. Related art

Example-Based Machine Translation (EBMT) is an approach to engineering MT systems that involves creating new translations from combinations of fragments of examples from a corpus of aligned phrases, also referred to as phrase translation pairs. A review of EBMT systems can be found in the article "Review Article: Example-based Machine Translation" by H Somers, Machine Translation, Vol. 14, No. 2, 1999, pages 113 to 157. The original suggestion for this approach is generally ascribed to Makoto Nagao who in 1990 was the first to describe the various stages used, see the article "Toward Memory-based Translation" by S Sato and M Nagao, Proceedings of 13th International Conference on Computational Linguistics, Helsinki 1990 (COLING-90), pages 247 to 252. Since then, research has steadily grown in this area to produce a wide range of techniques with various advantages and limitations.

Two strands of EBMT are particularly relevant to the present invention, and these can be characterised according to the nature of their training data.

In a first of these strands, the training data is simply a corpus of aligned phrases with no structural analysis (though sometimes, morphological analysis is carried out). If unanalysed, aligned phrases are used as the training corpus, then a pattern-based approach might be to produce templates that can be re-combined to form new translations. See, for example, the articles "Learning Translation Templates from Examples", by H A Guvenir and I Cicekli, Information Systems, Vol. 23, No 6, (1998), pages 353 to 363; and "A Language-Neutral Sparse-Data Algorithm for Extracting Translation Patterns", by K McTait and A Trujillo, Proceedings of the 8th International Conference on Theoretical and Methodological Issues in Machine Translation, TMI-99, Chester, UK, pages 98 to 108. For this reason, this approach is called "Pattern-Based MT".

In the second strand, the aligned phrases of the corpus are annotated with a manual analysis and fine-grained alignment. This second strand has been called Data-Oriented Translation (DOT) by A Poutsma because of its connection with Data-Oriented Parsing (DOP). For information on DOT, see the article "Data-Oriented Translation" by A Poutsma, Proceedings of 9th meeting of Computational Linguistics in the Netherlands, Amsterdam (1998 CLIN), and for information on DOP, see "Data-Oriented Language Processing: An Overview" by R. Bod and R. Scha, (ILLC Research Report LP-96-13), Institute for Logic, Language and Computation, University of Amsterdam, The Netherlands, 1996.

There are advantages and disadvantages to both techniques. The main advantage of using unanalysed phrases as the training data is that a relatively small human effort is required to produce the training data, and, therefore, large quantities may be created for a given cost. For the same cost, an analysed, aligned corpus will be much smaller.

It is known that there is a clear relationship between Pattern-Based MT and Context Free Grammars (CFG), see the paper "Pattern-Based Context-Free Grammars for Machine Translation" by K Takeda, Proceedings of the 34th Annual Meeting of the Association for Computational Linguistics, 1996. In CFG, the format of the rules is a left hand side (e.g. M) and a right hand side (e.g. A, B, C...), which expresses the situation where a sequence of terms with labels 'A', 'B', 'C' etc. can be replaced by a single term with label M.

Rules in this format are said to be 'context-free' since the left hand side contains precisely one term; other terms cannot be introduced to provide a context. These rules can be applied recursively, normally using a parser, to build up a parse tree which represents the analysis of some phrase.

It is known that CFGs do provide a first approximation to the structure of human language. However, it is also known that there are common linguistic phenomena that require substantial modification of the CFG model. Perhaps the most studied of these phenomena are so-called 'unbounded dependencies'. Various methods have been proposed to extend CFGs to handle such phenomena. The most common approach is to add a mechanism which allows information to pass across the tree, thereby giving a limited context sensitivity to the rules. More information on this can be obtained from the article "Extraposition Grammars" by F Pereira, American Journal of Computational Linguistics, Vol. 7, No. 4, 1981, pages 243 to 256; the book "Generalised Phrase Structure Grammar" by G Gazdar, E Klein, G K Pullum and I A Sag, published by Harvard University Press, 1985; and the book "Head-Driven Phrase Structure Grammar" by C Pollard and I A Sag, published by The University of Chicago Press, 1994. Generalised Phrase Structure Grammar and Head-Driven Phrase Structure Grammar are generally referred to as GPSG and HPSD, respectively.

Also known in the field of CFG is the article "Inferring Maximally Invertible Bi-grammars for Example-Based Machine Translation", by M Carl and D Wu, November 1999 (XP002384886) This article discloses the use of an example base comprising a set of reference translations to infer translation templates and incorporate them into the example base, and discusses the application of invertibleness conditions so as to obtain enhanced precision of the bilingual alignment process, reduction of the complexity of the inferred grammar, and discovery of inconsistencies in bi-corpora.

Another article in the field of CFG is "Learning Context-Free Grammars with a Simplicity Bias" by Pat Langley and Sean Stromsten, June 2000 (XP002384887). This article discloses an algorithm that alternates between merging existing nonterminal symbols and creating new symbols, using a beam search to move from complex to simpler grammars, this algorithm being based on J G Wolff's SNPR (the GRIDS system) which incorporates a bias towards grammars that minimize description length.

In the art, and herein, the terms "head", "headword" and "head word" are synonymous and are used interchangeably.

It is known that one of the limitations of basic CFGs is that they cannot adequately express the relationships present In unbounded dependencies. The result of this is that, even in a relatively simple case where source and target structures are very similar, the Pattern-Based approach will admit translations that are incorrect as a result of the constraints placed on the possible analyses by the underlying models. That is, the underlying representation will give poor "precision" in many cases.

It is also known that the restrictions imposed by the representation underlying Pattern-Based MT break the relationship between the head and its dependents for linguistic phenomena, such as unbounded dependencies, or where the source and target languages are structurally dissimilar. In these cases, Pattern-Based MT will achieve a poor precision/recall trade-off.

SUMMARY OF THE INVENTION

In accordance with a first aspect of the invention there is provided a method of generating a set of grammar rules for at least one of a given pair of languages, referred to as the required set of grammar rules, comprising the steps:

(a) acquiring a first set of phrases in one of the pair of languages and a corresponding second set of phrases in the other of the pair of languages, the sets of phrases constituting a set of phrase translation pairs in the given pair of languages; and

(b) generating a respective set of grammar rules in respect of at least the first set of phrases; the method being characterised by the steps:

(c) generating, for each member of the or each set of phrases for which a set of grammar rules has been generated under step (b), by use of an analysis generator using the corresponding generated set of grammar rules, a respective set of analyses;

(d) ascertaining, for each of the analyses, the respective alternations thereof;

(e1) if only one set of grammar rules has been generated under step (b), ranking the alternations in accordance with a predetermined criterion, each such alternation being referred to as an ascertainment result, or

(e2) if two sets of grammar rules have been generated under step (b), ascertaining each alternation of the respective alternations of said first set of phrases which is aligned with an alternation of the respective alternations of said second set of phrases, and ranking the aligned pair of alternations in accordance with a predetermined criterion, each such aligned pair of alternations being referred to as an ascertainment result; and

(f) making the highest ranking ascertainment result or ascertainment results a member or members of a set of selected ascertainment results, and similarly for the next highest ranking ascertainment result or ascertainment results, and so on, and ceasing when the set of selected ascertainment results acting as grammar rules has become sufficient such that

for each of the phrases of the relevant set of phrases, if step (e1) has been performed, or

for each member of the set of phrase translation pairs, and for each of the phrases of the particular member, if step (e2) has been performed,

there exists at least one analysis corresponding to the set of selected ascertainment results, whereupon the current list of selected ascertainment results is then deemed to be the required set of grammar rules.

The ranking step (e1) may comprise the substeps:

(e1.1) ascertaining, for each analysis for a said phrase, respective frequencies of each of its ascertainment results;

(e1.2) ascertaining, for all said analyses of the said phrase, respective highest frequencies of each of the ascertainment results;

(e1.3) repeating substeps (e1.1) and (e1.2) for each remaining phrase of the relevant set of phrases and ascertaining, for each of the ascertainment results, the sum of the associated respective highest frequencies; and

(e1.4) allocating to the ascertainment results a ranking in accordance with their respective sums.

The ranking step (e2) may comprise the substeps:

(e2.1) ascertaining, for each analysis for each phrase of a phrase translation pair, respective frequencies of the alternations of each aligned pair of alternations;

(e2.2) ascertaining, for each alternation of an aligned pair of alternations and for all the possible analyses of that aligned pair of phrases, respective highest frequencies of each of the alternations;

(e2.3) ascertaining, for each alternation pair and for each phrase translation pair, the lower of the highest frequency in respect of the analyses of the first set of phrases and the highest frequency in respect of the analyses of the second set of phrases;

(e2.4) repeating substeps (e2.1) and (e2.2) for each remaining phrase of said set of phrases and ascertaining, for each of the alternation pairs, the sum of the associated respective lower highest frequencies; and

(e2.5) allocating to the aligned pairs of alternations a ranking in accordance with their respective sums.

The set of grammar rules generated under step (b) may consist of all possible grammar rules, the corresponding set of analyses for each member of the relevant set of phrases then consisting of all possible analyses.

Preferably, step (b) and step (c) are together constituted by a single step (bc) comprising the substeps:

(bc1) parsing each respective member of the relevant set of phrases with a dependency grammar chart parser having an agenda and a chart; and

(bc2) forming packed edges in the chart.

More preferably, substep (bc1) comprises the substep (bc1.1) initialising the agenda with inactive edges formed from headwords identified in the respective member of the relevant set of phrases.

Yet more preferably, substep (bc1) further comprises the substep (bc1.2) adding to the agenda, for each inactive edge removed from the agenda by the operation of the chart parser, one or more active edges created using the set of grammar rules generated under step (b).

Step (b) and step (c) may be together constituted by a single step generating, by a dependency representation generator, for each member of the relevant set of phrases, a respective set of dependency representations, the dependency representations constituting said analyses.

In accordance with a second aspect of the invention there is provided an apparatus for forming a set of grammar rules for a given language, referred to as the required set of grammar rules, comprising:

a store for storing a first set of phrases in the given language and a corresponding second set of phrases in another language, the sets of phrases constituting a set of phrase translation pairs in the two languages;

a grammar rule generator for generating, in respect of a set of phrases applied to the grammar rule generator, a set of possible grammar rules in respect of that applied set of phrases;

an analysis generator arranged to use the possible grammar rules generated by the grammar rule generator for generating, for each member of a set of phrases applied to the analysis generator, a predetermined number of analyses;

means for applying the first set of phrases to the grammar rule generator and the analysis generator;

means for finding, for each of the generated analyses, the respective alternations thereof and designating each such found alternation a member of a list of potential grammar rules;

means for ranking the designated members in accordance with a predetermined criterion; and

means for repeated operation of actually or effectively transferring the current highest ranking designated member or members to an initially empty final list and then checking whether there exists, for each member of that applied set of phrases, at least one analysis corresponding to the grammar rules currently in that final list, and being arranged to cease operation upon a positive outcome of that check, the grammar rules currently in that final list being then deemed to be the required set of grammar rules.

The ranking means may comprise:

means for ascertaining, for a said analysis, respective frequencies of each of the alternations thereof;

means for ascertaining, for all the possible analyses of a said phrase, respective highest frequencies of each of the alternations of those analyses;

means for summing, for all the phrases and for each of the alternations, the associated respective highest frequencies; and

means for allocating to the alternations a ranking in accordance with their respective sums.

An apparatus of the second aspect of this invention may be arranged for forming a set of bi-lingual grammar rules for the two languages, referred to as the required set of bi-lingual grammar rules:

the means for applying being also arranged to apply the second set of phrases to the grammar rule generator and the analysis generator;

the means for finding being also arranged to find from the respective alternations produced when both sets of phrases are applied to the grammar rule generator and the analysis generator, each alternation of the respective alternations of said first set of phrases which is aligned with an alternation of the respective alternations of said second set of phrases, each such aligned pair of alternations being referred to as an alternation pair, and designating each such found alternation pair a member of a list of potential bi-lingual grammar rules; and

the transferring and checking means being also arranged for repeated operation of actually or effectively transferring the current highest ranking designated member or members of the list of potential bi-lingual grammar rules to the initially empty final list, and for checking whether there exists, for each of the phrases of each member of the set of phrase translation pairs, at least one analysis corresponding to the bi-lingual grammar rules currently in that final list, and being arranged to cease operation upon a positive outcome of that check, the grammar rules currently in that final list being then deemed to be the required set of bi-lingual grammar rules.

Preferably, the ranking means comprises:

means for ascertaining, for a said analysis, respective frequencies of each of the alternations thereof;

means for ascertaining, for all the possible analyses of a said phrase, respective highest frequencies of each of the alternations of those analyses;

means for ascertaining, for each alternation pair and for each of the translation pairs, the lower of the highest frequency in respect of the analyses of the phrases in the first language and the highest frequency in respect of the analyses of the phrases in the second language;

means for summing, for all the phrases and for each of the alternations, the associated respective lower highest frequencies; and

means for allocating to the alternations a ranking in accordance with their respective sums.

The analysis generator may be a dependency grammar chart parser having an agenda and a chart and arranged to form packed edges in the chart.

Preferably, there is included means for identifying headwords in a phrase and for initialising the agenda with inactive edges formed from headwords so identified.

More preferably, the grammar rule generator is arranged to add to the agenda, for each inactive edge removed from the agenda by the operation of the chart parser, one or more active edges created as if all possible grammar rules existed.

The grammar rule generator and the analysis generator may be together constituted by a dependency representation generator, the dependency representations constituting said analyses.

## Brief Description of the Drawings

Preferred embodiments of an apparatus and a method of the present invention will now be described by way of example with reference to the drawings, in which:

Figure 1 shows a general purpose computer system which provides the operating environment of embodiments of the present invention;

Figure 2 shows a system block diagram of the system components of the computer system 1;

Figures 3 to 21 show dependency representations of various analyses of the phrase "the cat sees a dog"; and

Figures 22 to 40 show dependency representations of various analyses of the phrase "a bear eats the fish".

## Detailed Description of the Preferred Embodiments

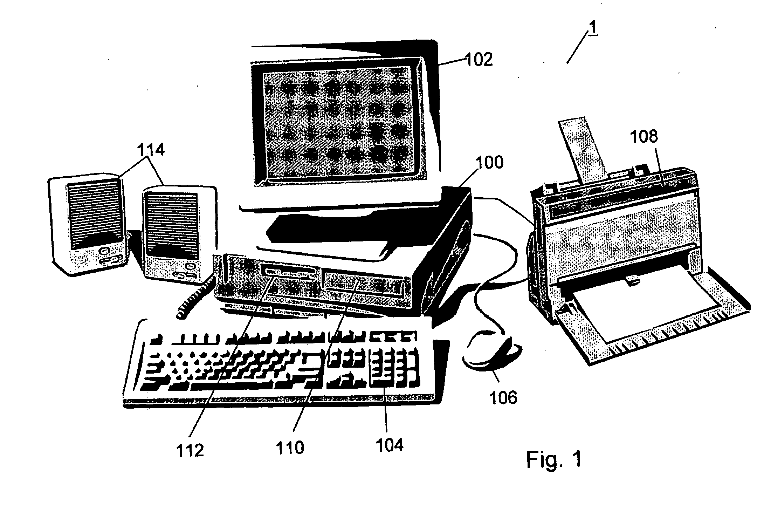

Figure 1 shows a general purpose computer system which provides the operating environment of embodiments of the present invention. Later, the operation of the embodiments of the present invention will be described in the general context of computer executable instructions, such as program modules, being executed by a computer. Such program modules may include processes, programs, objects, components, data structures, data variables, or the like that perform tasks or implement particular abstract data types. Moreover, it should be understood by the intended reader that the invention may be embodied within other computer systems other than those shown in Figure 1, and in particular hand held devices, notebook computers, main frame computers, mini computers, multi processor systems, distributed systems, etc. Within a distributed computing environment, multiple computer systems may be connected to a communications network and individual program modules of the invention may be distributed amongst the computer systems.

With specific reference to Figure 1, a general purpose computer system 1 which may form the operating environment of an embodiment of an invention, and which is generally known in the art comprises a desk-top chassis base unit 100 within which is contained the computer power unit, mother board, hard disk drive or drives, system memory, graphics and sound cards, as well as various input and output interfaces. Furthermore, the chassis also provides a housing for an optical disk drive 110 which is capable of reading from and/or writing to a removable optical disk such as a CD, CDR, CDRW, DVD, or the like. Furthermore, the chassis unit 100 also houses a magnetic floppy disk drive 112 capable of accepting and reading from and/or writing to magnetic floppy disks. The base chassis unit 100 also has provided on the back thereof numerous input and output ports for peripherals such as a monitor 102 used to provide a visual display to the user, a printer 108 which may be used to provide paper copies of computer output, and speakers 114 for producing an audio output. A user may input data and commands to the computer system via a keyboard 104, or a pointing device such as the mouse 106.

It will be appreciated that Figure 1 illustrates an exemplary embodiment only, and that other configurations of computer systems are possible which can be used with the present invention. In particular, the base chassis unit 100 may be in a tower configuration, or alternatively the computer system 1 may be portable in that it is embodied in a laptop or notebook configuration. Other configurations such as personal digital assistants or even mobile phones may also be possible.

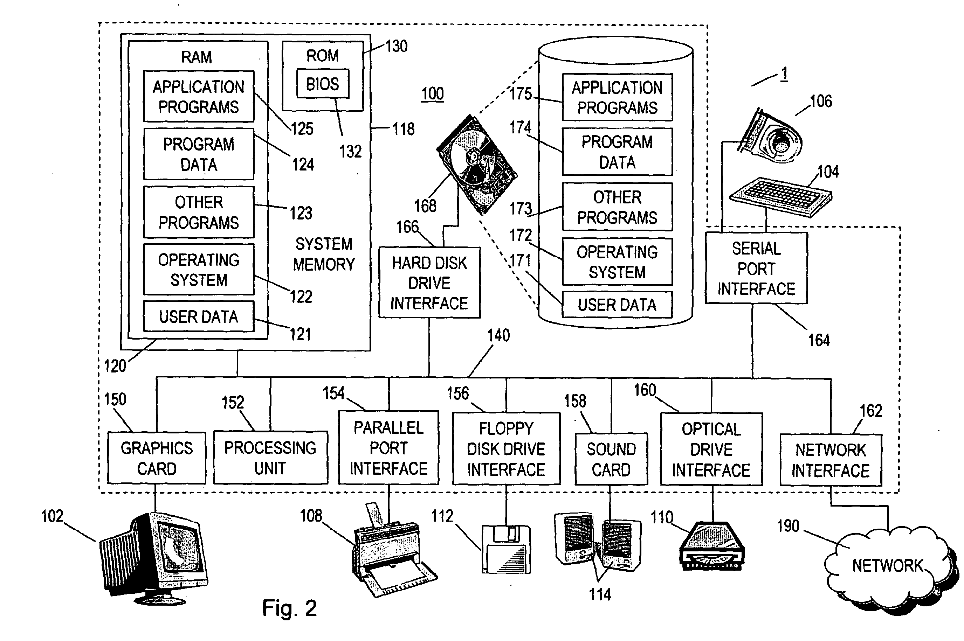

Figure 2 shows a system block diagram of the system components of the computer system 1. Those system components located within the dotted lines are those which would normally be found within the chassis unit 100.

With reference to Figure 2, the internal components of the computer system 1 include a mother board upon which is mounted system memory 118 which itself comprises random access memory 120, and read only memory 130. In addition, a system bus 140 is provided which couples various system components including the system memory 118 with a processing unit 152. Also coupled to the system bus 140 are a graphics card 150 for providing a video output to the monitor 102; a parallel port interface 154 which provides an input and output interface to the system and in this embodiment provides a control output to the printer 108; and a floppy disk drive interface 156 which controls the floppy disk drive 112 so as to read data from any floppy disk inserted therein, or to write data thereto. In addition, also coupled to the system bus 140 are a sound card 158 which provides an audio output signal to the speakers 114; an optical drive interface 160 which controls the optical disk drive 110 so as to read data from and write data to a removable optical disk inserted therein; and a serial port interface 164, which, similar to the parallel port interface 154, provides an input and output interface to and from the system. In this case, the serial port interface provides an input port for the keyboard 104, and the pointing device 106, which may be a track ball, mouse, or the like.

Additionally coupled to the system bus 140 is a network interface 162 in the form of a network card or the like arranged to allow the computer system 1 to communicate with other computer systems over a network 190. The network 190 may be a local area network, wide area network, local wireless network, or the like. In particular, IEEE 802.11 wireless LAN networks may be of particular use to allow for mobility of the computer system. The network interface 162 allows the computer system 1 to form logical connections over the network 190 with other computer systems such as servers, routers, or peer-level computers, for the exchange of programs or data.

In addition, there is also provided a hard disk drive interface 166 which is coupled to the system bus 140, and which controls the reading from and writing to of data or programs from or to a hard disk drive 168. All of the hard disk drive 168, optical disks used with the optical drive 110, or floppy disks used with the floppy disk 112 provide non-volatile storage of computer readable instructions, data structures, program modules, and other data for the computer system 1. Although these three specific types of computer readable storage media have been described here, it will be understood by the intended reader that other types of computer readable media which can store data may be used, and in particular magnetic cassettes, flash memory cards, tape storage drives, digital versatile disks, or the like.

Each of the computer readable storage media such as the hard disk drive 168, or any floppy disks or optical disks, may store a variety of programs, program modules, or data. In particular, the hard disk drive 168 in the embodiment particularly stores a number of application programs 175, application program data 174, other programs 173 required by the computer system 1 or the user, a computer system operating system 172 such as Microsoft® Windows®, Linux™, Unix™, or the like, as well as user data in the form of files, data structures, or other data 171. The hard disk drive 168 provides non-volatile storage of the aforementioned programs and data such that the programs and data can be permanently stored without power. The other programs 173 include a program or programs for implementing methods of the present invention (i.e. a program for generating a set of grammar rules of the present invention a program for generating a set of bilingual grammar rules of the present invention), and the user data 171 includes a bilingual (English - French) corpus of pairs of phrases (typically sentences) that are translations of one another. In a variant, the applications programs 175 contain program or programs for implementing methods of the present invention.

In order for the computer system 1 to make use of the application programs or data stored on the hard disk drive 168, or other computer readable storage media, the system memory 118 provides the random access memory 120, which provides memory storage for the application programs, program data, other programs, operating systems, and user data, when required by the computer system 1. When these programs and data are loaded in the random access memory 120, a specific portion of the memory 125 will hold the application programs, another portion 124 may hold the program data, a third portion 123 the other programs, a fourth portion 122 the operating system, and a fifth portion 121 may hold the user data. It will be understood by the intended reader that the various programs and data may be moved in and out of the random access memory 120 by the computer system as required. More particularly, where a program or data is not being used by the computer system, then it is likely that it will not be stored in the random access memory 120, but instead will be returned to non-volatile storage on the hard disk 168.

The system memory 118 also provides read only memory 130, which provides memory storage for the basic input and output system (BIOS) containing the basic information and commands to transfer information between the system elements within the computer system 1. The BIOS is essential at system start-up, in order to provide basic information as to how the various system elements communicate with each other and allow the system to boot-up.

Whilst Figure 2 illustrates one embodiment of the invention, it will be understood by the skilled person that other peripheral devices may be attached to the computer system, such as, for example, microphones, joysticks, game pads, scanners, or the like. In addition, with respect to the network interface 162, we have previously described how this is preferably a wireless LAN network card, although equally it should also be understood that the computer system 1 may be provided with a modem attached to either of the serial port interface 164 or the parallel port interface 154, and which is arranged to form logical connections from the computer system 1 to other computers via the public switched telephone network (PSTN).

Where the computer system 1 is used in a network environment, it should further be understood that the application programs, other programs, and other data which may be stored locally in the computer system may also be stored, either alternatively or additionally, on remote computers, and accessed by the computer system 1 by logical connections formed over the network 190.

The starting point for the grammar rule induction method of the present invention is a corpus of pairs of phrases (typically sentences), where each pair of phrases comprises a respective phrase in a common source language together with its linguistic equivalent in a common target language. It does not matter whether, for any particular one of the pairs of phrases, the target language phrase was produced by translating the source language phrase, or whether the source language phrase was produced by translating the target language phrase. Such a pair of phrases is herein referred to as a phrase translation pair, or simply a translation pair, or an example, and such a corpus is herein referred to as a translation pair corpus or a training corpus. The corpus is contained within the user data 171 of the computer system 1.

Firstly, a lexical alignment is performed to indicate, in each of the pairs of phrases, aligned words (referred to as headwords) in the source and target languages. This will involve the use of a dictionary contained within user data 171, and be performed by a computer program contained within the other programs 173. Alternatively, the lexical alignment is performed manually by a person skilled in the art. This lexical alignment will include recognition of, say, the same proper name, or the same date, in the source and target languages, and for this purpose might involve special recognition algorithms.

The dependency analyses produced by context-free grammar (CFG) rules are planar trees, wherein all non-headwords are leaves. Since it is not known what the grammar is, initially all such trees have to be considered as possibilities. For any given phrase pair, there will typically be a very large number of topologically legal analyses.

In order to select the dependency analysis, and therefore the grammar, which is likely to be correct, a first preferred embodiment of the present invention applies two criteria. One is the use of minimum description length (MDL) approach to optimisation, and the other is that a head word determines its daughters. For a background to the minimum description length criterion, the reader is referred to the publication "Machine Learning" by T Mitchell, McGraw-Hill International Editions, 1997; the paper ""Generalizing Case Frames Using a Thesaurus and the MDL Principle" by H Li and N Abe, Computational Linguistics, Vol. 24, No. 2, pages 217 to 244; and the paper "Learning Dependencies between Case Frame Slots" by H Li and N Abe, Computational Linguistics, Vol. 25, No. 2, pages 292 to 303.

For the purpose of the present invention, an informal definition of description length is adequate, this being the number of distinct alternations required to analyse a corpus of examples. As is known in the art, in the monolingual DOT case, an alternation is defined as a grammar rule with the headword replaced by a generic headword marker symbol, and in the Pattern-based case, an alternation pair is defined as a synchronised pair of rules with source and target heads replaced by a generic head marker symbol. For more information on alternations the reader is referred to the publication "English Verb Classes and Alternations: A Preliminary Investigation" by Beth Levin, The University of Chicago Press, 1993.

The intention of this preferred embodiment of the present invention is to find the smallest number of distinct alternations such that, when headwords are re-inserted in place of the head marker symbols, they produce grammar rules that are capable of providing an analysis for every translation pair in the training corpus.

In a second preferred embodiment of the present invention to be described later, this is achieved by producing every possible analysis which corresponds to a legal topology, i.e. a planar tree in one of the languages which is isomorphic to some planar tree in the other of the languages, decomposing each analysis into grammar rules, removing the heads from these rules to make alternations, then observing the distributions of the alternations. To be certain of having the minimal set, it would be necessary to try every possible subset of alternations which is capable of forming grammar rules which analyse the whole corpus, and select the smallest such subset.

This approach would be practicable only for small corpora. So, a simplifying assumption is made that the most frequent alternations will tend to be members of the minimal set. Conversely, it can be said that the minimal set is unlikely to include infrequent alternations, and, in practice, the preferred embodiment adopts this latter approach by stipulating that the analysis that is selected for any example will be that which has the highest minimum frequency alternation. That is, for each analysis for a given example, the lowest frequency of the alternations used in that analysis is found. Then the embodiment selects the analysis for that phrase that has the highest such frequency as being most likely to be correct.

Because the actual frequency of occurrence of the alternations will not be known until the correct analyses are known, the actual frequency of occurrence of the alternations cannot be used to determine the best analysis. Instead, this preferred embodiment uses estimates of the frequencies which are calculated by finding the highest number of times that an alternation can occur in any one analysis of each phrase (referred to herein as the "highest frequency"), then summing the respective highest counts over all phrases. This is the most optimistic view of the number of times that an alternation could appear in the correct analyses of the phrases.

In summary, the frequency counts have been defined and the manner in which they will be used to estimate the minimal subset of alternations required to analyse the translation pair corpus has been described. An algorithm, referred to as the count alternations function, for calculating these frequencies will be described in detail later.

It has already been mentioned that the number of topologically plausible analyses can be very large. Therefore, this preferred embodiment of the present invention seeks to estimate the frequencies of the alternations for inducing monolingual grammar rules (and bilingual synchronised grammar rules) without having to produce every possible analysis. In particular, the preferred method counts frequencies for alternations in all possible analyses of a text, without the need to create these analyses explicitly. The approach is to use a chart parser modified for the specific purposes of the present invention. In order that the reader will be able to understand the operation of the present invention more readily, the normal operation of a conventional chart parser will now be described. For more detailed information, the reader is referred to the book "Natural Language Processing in Lisp" by Gerald Gazdar and Chris Mellish, published by Addison Wesley, 1989, ISBN 0201178257.

A Conventional Chart Parser for Dependency Grammars

The objective of a conventional chart parser is to produce one or more analyses of an input text, given a grammar. An efficient chart parser will do this in a way that does not repeat any attempt to analyse a portion of the text. To achieve this, a chart parser uses two key data structures: a chart and an agenda. Both the agenda and the chart are arranged to store, during processing, data structures known in the art as "edges". The agenda is for storing a list of edges yet to be processed by the chart parser. The chart is for storing the results of processing the edges in the agenda.

An edge can be thought of as an instance of a grammar rule. An edge includes information representing the progress of application of the rule to the input text.

Edges can be one of two activity types, "active" or "inactive". Another way of expressing this is to say that edges are either "active" or "inactive". An active edge is one that still requires more terms to be found to satisfy the grammar rule on which it is based. Conversely, an inactive edge is complete, in that it does not require any more terms to be found to satisfy its grammar rule. Each edge is associated with a respective activity marking, i.e. "(left active)", "right active)" or "(inactive)", and this marking is checked and updated, as necessary, each time that the edge is extended. An edge that is left active can be extended only on its left side, and similarly an edge that is right active can be extended only on its right side.

Two versions of conventional chart parser are known. A first version is used with phrase-structure grammars, and a second version, derived from the first version, is used with dependency grammars. In the first version, the parser works from left to right of the input text. In the second version, the parser works from the head word outwards, and the order in which the daughters are considered is constrained. Furthermore, in this second version, a search for daughters to the right of a head word is not performed until a search for daughters to the left of that head word has been completed, i.e. all the left hand daughters have been found. Thus, there are two types of active edge (rule), namely left active and right active, with the restriction that an edge, or rule, can only be right active if it is not left active. This is to avoid spurious ambiguities. An alternative form of dependency grammar chart parser is known which uses the inverse of this constraint and restriction, i.e. a search for daughters to the left of a head word is not performed until a search for daughters to the right of that head word has been completed, and a rule can only be left active if it is not right active.

To see how edges are formed, and how a known dependency grammar chart parser operates, consider the following example.

Suppose that it is desired to analyse the following input text,

0 the 1 dog 2 sees 3 the 4 cat 5

(where, as is known in the art, the numerals are used to identify positions of "vertices" - vertex "0" denoting the start of the input text, and vertex "5" being found to be the highest numbered vertex needed for this particular input text) with the following grammar,

    A <sees> the B
    the <dog>
    <cat>

An initial set of edges is created by searching the grammar for rules whose head words match the input text. For each such match an edge is created and stored in the agenda. The initial set of edges corresponding to the above example is,

    A | <sees> | the B : (2,3) : (left active)
    the | <dog> | : (1,2) : (left active)
    | <cat> | (4,5) : (inactive)
    where,

the two vertical bars, |, in an edge indicate the start position and finish position of the part of that grammar rule that has been matched so far; the pairs of numbers in brackets indicate the respective positions of the two vertices defining the start and finish of that part of the input text spanned by the edge so far, i.e. the "span", and are therefore referred to herein as the span descriptor (SD); and the edge activity type is either left active, right active or inactive.

The first two of these edges are referred to as active edges since the whole rule is not matched, i.e. the rule is not wholly between the start and finish vertices of the edge. The last edge is referred to as an inactive edge as it does not require any further terms to be found to complete the grammar rule, i.e. the rule does lie wholly within the start and finish vertices of the edge.

In operation, the chart parser removes, i.e. extracts, an edge from its agenda, usually the edge which is at the top of the list of edges in the agenda, and processes that edge in accordance with its controlling program, also referred to herein as the parsing algorithm or algorithm. In a first step, the algorithm ascertains whether the edge is active (left or right) or inactive. If the edge is left active, the algorithm tries to find terms to match its left daughter, and if the edge is right active, the algorithm tries to find terms to match its right daughter.

If a daughter in an active edge is a literal word, the algorithm attempts to match that literal word against a literal word in the text in the same position with respect to the marked head word as that daughter is with respect to the head word of the edge. On the other hand, if the daughter in that active edge is a variable, the algorithm attempts to match an inactive edge in the chart against a word in the text in the same position with respect to the marked head word as that variable daughter is with respect to the head word of the edge. If a match is found between a variable daughter and an inactive edge, then the algorithm stores a link between that variable and the inactive edge in order to be able to recover the analysis.

Whenever, during processing of an active edge, the algorithm successfully finds a match for a daughter against an inactive edge, or a literal word, it creates from that original active edge a new edge, this is referred to as "extending" the active edge, by updating the span descriptor, and the edge activity type, as appropriate, and adding that new edge to the top of the list of edges in the agenda, also referred to as adding the edge to the top of the agenda, or just adding it to the agenda. Then, finally, the originally removed edge is added to the chart.

The conventional DG chart parsing algorithm can thus be summarised as,

Using the grammar, prime the agenda with edges,
Until the agenda is empty,

    Remove an edge from the agenda and add it to the chart,
    If the removed edge is active,

        Create from that removed edge a respective extended edge for each literal word in the input text that can extend that removed edge and also for each inactive edge in the chart that can extend that removed edge,
        Add all such extended edges to the agenda,

If the removed edge is inactive,

Create a respective extended edge for each active edge in the chart that the removed edge can extend,
Add all such extended edges to the agenda.

There exists a valid analysis for the input text if, at the end of parsing, there exists in the chart an inactive edge that spans the whole of the text.

Consider now the analysis of the input text referred to above,

the dog sees the cat

Assuming the initial set of edges stated above, the algorithm first removes the edge "A | <sees> | the B : (2,3) : (left active)". It is found to be a left active edge, and as the left daughter is not a literal, the search for a matching literal in the input text is omitted, and a search is conducted in the chart for an inactive edge to match the left daughter. The chart is empty, so this edge is added to the chart.

The agenda and chart then contain:

```
Agenda
        the | <dog> | : (1,2) : (left active)
        | <cat> | (4:5) : (inactive)
Chart
        A | <sees> | the B : (2,3) : (left active)
```

Next, the edge "the | <dog> | : (1,2) : (left active)" is removed from the agenda. Again, it is found to be a left active edge, but this edge requires a match for a literal word ("the") to the left of its span descriptor, i.e. in the position "0,1". This word is found in the text and so this edge is extended. The original edge, "the | <dog> | : (1,2) : (left active)", is added to the chart, and the newly created edge, "| the <dog> | : (0,2) : (inactive)" is added to the bottom of the agenda to give:

```
Agenda
        | <cat> | : (4:5) : (inactive)
        | the <dog> | : (0,2) : (inactive)
Chart
        A | <sees> | the B: (2,3) : (left active)
        the | <dog> |: (1,2) : (left active)
```

Next, the edge "| <cat> | :(4,5 ) : (inactive)" is removed from the agenda. It is found to be an inactive edge, so a search is conducted for both left active and right active edges in the chart that can be extended by it. No such edge is found, so the only action is the addition of this edge to the chart to give:

```
Agenda
        | the <dog> | : (0,2) : (inactive)
Chart
        A | <sees> | the B : (2,3) : (left active)
        the | <dog> | : (1,2) : (left active)
        | <cat> | : (4:5) : (inactive)
```

Next, the edge "| the <dog> | : (0,2) : (inactive)" is removed from the agenda. It is found to be an inactive edge, so a search is conducted in the chart for any left active or right active edges that can be extended by it. The search finds "A | <sees> | the B : (2,3) : (left active)", and, therefore, a new edge "| (the <dog>) <sees> | the B : (0,3) : (right active)" is formed, where parentheses are used to indicate the nesting structure of the analysis, i.e. that "the <dog>" is governed by "A <sees> the B". This new, extended, edge is added to the agenda, and the original edge, i.e. "| the <dog> | : (0,2) : (inactive)", is added to the chart to give:

```
Agenda
        | (the <dog>) <sees> | the B : (0,3) : (right active)
Chart
        | the <dog> | : (0,2) : (inactive)
        A | <sees> | the B : (2,3) : (left active)
        the | <dog> | : (1,2) : (left active)
        |<cat>| : (4:5) : (inactive)
```

Next, the edge "| (the <dog>) <sees> | the B : (0,3) : (right active)" is removed from the agenda. It is found to be a right active edge, so it requires a match for its literal right daughter "the". This word is found in the input text, so a new, extended, edge "| (the <dog>) <sees> the | B : (0,4) : (right active)" is created and added to the agenda. The chart and agenda become:

```
Agenda
         | (the <dog>) <sees> the | B : (0,4) : (right active)
Chart
         | (the <dog>) <sees> | the B : (0,3) : (right active)
         | the <dog> | : (0,2) : (inactive)
       A | <sees> | the B : (2,3) : (left active)
        the | <dog> | : (1,2) : (left active)
         | <cat> | : (4:5) : (inactive)
```

Next, the edge "| (the <dog>) <sees> the | B : (0,4) : (right active)" is removed from the agenda. It is found to be a right active edge, so it requires an inactive edge to match its right daughter. A search of the chart finds "| <cat> | : (4,5) : (inactive)", and a new, extended, edge is created, "| (the <dog>) <sees> the (<cat>) | : (0,5) : (inactive)", which is added to the agenda. The chart and agenda become:

```
Agenda
         | (the <dog>) <sees> the (<cat>) | : (0,5) : (inactive)
Chart
         | (the <dog>) <sees> | the B : (0,3) : (right active)
         | the <dog> | : (0,2) : (inactive)
       A | <sees> | the B : (2,3) : (left active)
        the | <dog> | : (1,2) : (left active)
         | <cat> | : (4:5) : (inactive)
         | (the <dog>) <sees> the | B : (0,4) : (right active)
```

Finally, the edge "| (the <dog>) <sees> the (<cat>) | : (0,5) : (inactive)" is removed from the agenda. It is found to be an inactive edge, and no active edge is found in the chart capable of extending it, so it is just added to the chart to give:

```
Agenda
         Empty
Chart
         | (the <dog>) <sees> | the B : (0,3) : (right active)
         | the <dog> | : (0,2) : (inactive)
       A | <sees> | the B : (2,3) : (left active)
        the | <dog> | : (1,2) : (left active)
         | <cat> | : (4:5) : (inactive)
         | (the <dog>) <sees> the | B : (0,4) : (right active)
         | (the <dog>) <sees> the (<cat>) | : (0,5) : (inactive)
```

The chart now contains a single inactive edge whose span descriptor "(0,5)" indicate that this edge spans the whole of the input text from vertex "0" to vertex "5", already known to be the highest numbered vertex for this input text. Thus, this edge represents the analysis of the input text.

A conventional analysis recovery algorithm uses the span descriptor of the input text "(0,5)" and looks in the chart for an inactive edge having the same values of span descriptor. In other words, such an inactive edge would span the whole of the input text. For each daughter of this edge, the inactive edges that are the analyses of the variable daughters of that edge are sought. This continues recursively, until the whole of the tree for the analysis has been recovered. If there is more than one analysis, there will be more than one top-level edge, each corresponding to a distinct analysis.

Although the above parsing algorithm is much more efficient than other parsers, such as a backtracking parser, it still has one major inefficiency. There may be spans of text which have several analyses which are functionally equivalent. That is, any of the analyses may be used in place of the others to produce a grammatically valid analysis. When the parser is looking to extend an active edge, all that matters is that there exists at least one inactive edge which can be used to extend the active edge. With a conventional chart parser as described above, one new edge would be produced for each inactive edge capable of extending the active edge. This will lead to the chart parser repeating work.

The known solution commonly adopted for this is to "pack" functionally similar inactive edges into a "packed edge". As far as the chart parser is concerned, a packed edge looks like a single edge, but may contain a number of alternative analyses. The present invention employs this packing technique, treating all inactive edges with the same span descriptor as functionally equivalent, and packing them into a common packed edge.

To extend an active edge by matching a variable daughter, the present invention matches against packed edges instead of individual edges. This means that a link is retained from the variable to the packed edge, instead of to the individual edges.

Thus a modified chart parsing algorithm including this packing is,

```
Using the grammar, prime the agenda with edges,
Until the agenda is empty,
        Remove an edge from the agenda and add it to the chart,
        If the removed edge is left active or right active,
                Create from the removed edge a respective extended edge for a literal
            word in the input text that can extend the removed edge at its extendible
            side or for a packed edge in the chart that can extend the removed edge at
            its extendible side,
                Add any such extended edge to the agenda,
        If the removed edge is inactive,
                If there exists a packed edge having the same span as the removed edge,
                    Add the removed edge to that packed edge,
                Else,
                    Create a new packed edge and add the removed edge to it,
                    Create a respective extended edge for each active edge in the chart
                    that the new packed edge can extend,
                    Add all such extended edges to the agenda.
```

When packing is used, the procedure for extracting the complete set of analyses is a little more complicated. This procedure starts by looking for a top-level packed edge that spans the whole of the input text. This packed edge might contain more than one individual edge. For each variable daughter within each individual edge of this packed edge, all possible analyses are recursively found for the packed edge spanned by each daughter. This recursion continues until an edge is encountered having no variable daughter.

Using packing it is possible to store a very large number of analyses within a relatively small amount of memory, since common factors in different analyses are only stored once. Further, since the chart parser of the present invention processes all functionally equivalent items as a single unit, it does much less work.

MODIFICATIONS TO THE CONVENTIONAL CHART PARSER TO PRODUCE ALL POSSIBLE ANALYSES

A modified chart parser as used in the first preferred embodiment of the present invention will now be described. It will be understood by the skilled person that the chart parser is embodied by a program contained within other programs 173 and that the agenda and chart are embodied by suitable portions of the memory 168.

As mentioned above, it is required to be able to deem alternations valid based on their frequency of occurrence in possible analyses of the examples. In many cases, though, there will be a great number of possible analyses. Accordingly, the modified chart parser has been designed to count the frequencies of occurrence without producing every analysis.

Suppose that a grammar was available containing all possible grammar rules. Such a grammar would, theoretically, be infinitely large. If this grammar was run on some input text, a chart would be produced whose packed edges contained every possible analysis of that text in packed form. Although the number of analyses might be very large, the storage required for the chart is likely to be small enough to be manageable on practical computer systems.

For an $n$ word text, there are $n.(n-1)/2$ possible spans. Therefore, there are at most $n.(n-1)/2$ packed edges in the chart. For a 50 word sentence, this is a maximum of only 1225 packed edges.

Such a chart can be obtained by modifying the conventional chart parser to generate edges as required, as if every possible grammar rule existed. This is achieved as follows.

The starting point is an input text (say, one of the English phrases in the bilingual corpus 173) in which the headwords have been marked by a headword identifier program contained within other programs 173 and constituting a means of the present invention for identifying headwords in a phrase. In a variant method, the headwords are marked by a person skilled in the grammar of the language of that input text.

The chart parser is primed by creating inactive edges which span just the head words and putting these on the agenda, this being performed automatically by the computer/chart parser.

In accordance with the present invention, in addition to having an activity marking, edges have an augmentation marking, which is either "left-right augmentable" or "right-only augmentable". The initially created inactive edges are initially marked as "left-right augmentable". As used herein, the terms "augmentable" and "augmented" refer to the association of a term (the "augmentation") with an inactive edge, at its left or its right, as appropriate, without updating the span descriptor of the inactive edge. This distinguishes from the concept of extending edges, as described above, where, for example, the edge

```
         the | <cat> |: (1,2) (left active)
 becomes extended to
         | the <cat> |: (0,2) (inactive)
```

When an inactive edge marked as "left-right augmentable" is augmented to its left, its activity marking is changed to "left active" and it retains its "left-right augmentable" marking. However, when an inactive edge marked as "left-right augmentable" is augmented to its right, its activity marking is changed to "right active" and its "left-right augmentable" marking is replaced by a new marking of "right-only augmentable". When an edge marked as "right-only augmentable" is augmented to its right, it retains that "right-only augmentable" marking. For convenience, the term "right augmentable" is also used herein, synonymously and interchangeably with "right-only augmentable".

The algorithm (method) of the modified chart parser of the present invention performs additional steps over and above those of the conventional chart parser. These additional steps are: for each inactive edge that it removes from the agenda, ascertaining the augmentation marking of that edge, creating new, active edges from this inactive edge as described below, and the step of adding these newly created active edges to the agenda.

In this modified chart parser of the present invention, edges are removed from the top of the agenda and added to the top of the agenda. In a first alternative arrangement, edges are removed from the bottom of the agenda and added to the bottom, in a second alternative arrangement, edges are removed from the top of the agenda and added to the bottom, and in a third alternative arrangement, edges are removed from the bottom of the agenda and added to the top of the agenda. The common feature of all these arrangements is that the process continues until the agenda is empty, so as to ensure that all possible analyses are generated.

As an aid in understanding this step of creating new, active edges, let *leftWord* represent an adjacent literal in the input text to the left of the left-right augmentable inactive edge, and correspondingly for *rightWord*. Herein, the terms "adjacent" and "neighbouring" are used synonymously and interchangeably.

If an initial inactive edge is written as,

```
    |<head>| : (n,m) : (inactive, left-right augmentable)
```

the edge creating step of the present invention mentioned above creates as many of the following four new, active edges as is possible,

*leftWord* |<head>| : (n,m) : (left active, left-right augmentable)

|<head>| *rightWord* : (n,m) : (right active, right augmentable)

X |<head>| : (n,m) : (left active, left-right augmentable)

|<head>| Y : (n,m) : (right active, right augmentable)

It might not be possible to create one or more of these four new, active edges. For example, there might not be an adjacent word in the input text to the left of the inactive edge and therefore the first and third new, active edges cannot be created, and similarly for the second and fourth new, active edges when there is no word in the input text to the right of the inactive edge. Furthermore, if there exists an adjacent word in the input text to the left (or to the right) of the inactive edge, and that adjacent word is a head word, then this cannot be used as a literal to create the first (or the second) new, active edge.

This edge creating step leaves the initial augmentation marking of left-right unaltered for each new, active edge that has a new term to its left, i.e. has a left augmentation (first and third new, active edges), but alters this initial augmentation marking to right-only for each new, active edge that has a new term to its right (second and fourth new, active edges). In this preferred embodiment, it is not permitted to create a new, active edge having both a new term to its left and a new term to its right.

For an inactive edge which has been produced by extending a right active edge, for example,

```
    |...<head>...| : (n,m) (inactive, right augmentable)
```

the edge creating step of the present invention mentioned above creates one or both of the following new, active edges, as is possible,

$$|...\text{<head>}...| \; rightWord : (n,m) : (\text{right active, right augmentable})$$

$$|...\text{<head>}...| \; Y : (n,m) : (\text{right active, right augmentable})$$

As mentioned above, if there is no adjacent word in the input text to the right of the inactive edge, then neither of these new, active edges can be created, and if the word in the input text to the right of the inactive edge is a head word, then this cannot be used as a literal to create the first of these new, active edges.

All newly created, active edges are added to the agenda and processed in the same way as any other edge in the agenda.

In the above example, the agenda will initially contain the left-right augmentable, inactive edges

```
|<cat>| : (1,2) : (inactive, left-right augmentable)
|<sees>| : (2,3) : (inactive, left-right augmentable)
|<dog>| : (4,5) : (inactive, left-right augmentable)
Suppose now that the edge
|<sees>| : (2,3) : (inactive, left-right augmentable)
```

is removed from the agenda for processing. The algorithm will find that the input text contains the words "cat" to the left, and "the" to the right, of that edge, and so the following edges are created

```
| <sees> | the : (2,3) : (right active, right augmentable)
X | <sees> | : (2,3): (left active, left-right augmentable)
| <sees> | Y : (2,3) : (right active, right augmentable)
```

Note that

```
cat | <sees> | the : (2,3) : (right active, right augmentable)
would not be created because "cat" is a head word and cannot be used as a literal.
```

However, for the inactive edge

```
| <dog> | : (4,5) : (inactive, left-right augmentable)
as there is no word in the input text to the right of this inactive edge, the following edges
are created
the | <dog> | : (4,5) : (left active, left-right augmentable)
X | <dog> | : (4,5): (left active, left-right augmentable)
```

The outline of the modified chart parser algorithm of the present invention is therefore,

```
 Determine the head words of an input text, prime the agenda with inactive edges
 created from those head words, each such inactive edge having a corresponding
 span descriptor, an activity marking and an augmentation marking, the activity
 marking being initially selected to be inactive from a set of inactive, left active and
 right active, and the augmentation marking being initially selected to be left-right
 from a set of left-right and right-only,
 Until the agenda is empty,
     Remove an edge from the agenda,
         (A) If the removed edge has an activity marking of left active or right
          active,
         Create from the removed edge a respective extended edge for (A1)
          a literal word in the input text that can extend the removed edge at
          an extendible side or for (A2) a packed edge in the chart that can
           extend the removed edge at an extendible side, and for each
           respective extended edge update its span descriptor and, as
           appropriate, its activity marking,
```

```
            Add any such extended edge to the agenda,
        Add the removed edge to the chart,
        (B) If the removed edge has an activity marking of inactive,
                If there exists in the chart (B1) a packed edge having the same
                span descriptor as the removed edge, add the removed edge to
            that existing packed edge,
                Else, create in the chart (B2) a new packed edge for the span
                descriptor of the removed edge and store the removed edge in it,
                Create a respective extended edge for (B21) each active edge in
                the chart that the new packed edge can extend, and for each
                respective extended edge update its span descriptor and its activity
                marking accordingly,
                Add all such extended edges to the agenda,
        If the augmentation marking of the removed edge is (B3) left-right,
        ascertain from the input text such (B31) left and (B32) right neighbouring
        words as exist with respect to the removed edge, create from the removed
        edge a set of all possible active edges in which each active edge has either
        a left augmentation or a right augmentation, but not both left and right
        augmentations, and for each such active edge having a right augmentation
        changing its activity marking to right-only,
        Else, ascertain from the input text such (B4) right neighbouring word as
        exists with respect to the removed edge, create from the removed edge a
        set of all possible active edges in which each active edge has a right
        augmentation,
        all such augmentations being either (B41) the corresponding neighbouring
        word or (B42) a placeholder symbol, with the proviso that an augmentation
        cannot be the corresponding neighbouring word if that corresponding
        neighbouring word is a head word,
        Add the set of all possible active edges to the agenda.
```

In the above algorithm, the identifiers in italic, e.g. "(*B42*)", refer to corresponding steps in an example of the operation of a chart parser included at Appendix A.

It will be understood that an active edge can be either left active or right active, but not both left active and right active at the same time.

Now that a chart can be produced which contains every possible analysis, the frequency counts of the alternations can be extracted using the following recursive function, referred to herein as the "count alternations function", similar to that used for extracting analyses. In this high-level formulation of the function, for the sake of simplifying the detailed expression, ACounts and ECounts are stated to be initialised to zero before any other action takes place. However, in a working embodiment of this recursive function, the initialisation of the associative arrays does not occur at this point, but an equivalent effect is obtained by the execution of a line of code which occurs prior to the incrementing of counts and creates entries in the respective associative array only for non-zero counts.

The count alternations function is called on the packed edge that spans the whole of the input text, i.e. the packed edge whose span descriptor matches that of the input text.

```
    countAlternations(PackedEdge):-
            if the alternations have already been counted for this packed edge, then return the
            previous count and exit this function,
            initialise ACounts to zero, (ACounts is an associative array containing the largest
            number of times that each alternation occurs in any analysis),
            for each individual edge, E, within PackedEdge,
                    initialise ECounts to zero for each alternation (ECounts keep a count of the
                    largest number of times each alternation has occurred in any analysis of
                    E),
                    let A be the alternation for E,
                    increment ECounts[A],
                for each variable daughter D within E,
                        find the packed edge, PD, associated with D by the chart parser,
                        let DCounts=countAlternations(PD),
                        for each alternation, DA, with non-zero count in DCounts,
                                ECounts[DA]=ECounts[DA]+DCounts[DA],
                        next DA,
                    next D,
```

```
          for each alternation, A, with non-zero count in ECounts
                  ACounts[A] = greater of ACounts[A] and ECounts[A],
          next A,
     next E,
     store ACounts for PackedEdge and mark PackedEdge as having had its
     alternations counted,
     return ACounts,
  End.
```

As mentioned, the count alternations function is first called on the packed edge that spans the whole of the input text. It then calls itself on each variable daughter of each analysis. The first time this function is called on a packed edge, the results are stored so that the processing is not repeated for that edge.

This method is much more efficient than expanding the analyses, then extracting the alternations to count them.

In the context of the present invention of generating a set of grammar rules for a given language, the count alternations function is applied to the PE (start, finish) of each respective chart produced for a set of phrases in the given language, and the respective sets of alternation counts are combined, i.e. aggregated, to form a single list of the alternations ranked in accordance with their respective count totals.

The invention now proceeds to generate the required set of grammar rules by applying an alternation selection function to the ranked list of alternations. In this embodiment of the present invention, the phrases are arbitrarily allocated unique numbers and ranked in number order and each of the phrases is initially marked as non-fully analysed for the purpose of the operation of the alternation selection function.

The alternation selection function (at step 1) transfers the current highest ranking alternation, or alternations (if two or more alternations have a common total count) to a store for the required set of grammar rules.

The function next (at step 2) primes the agenda of a chart parser with the current content of the store and analyses (at step 3) the highest ranking non-fully analysed phrase of the set of phrases, noting its start and finish vertices.

Then, (at step 4), the function asks the question "does the chart contain a packed edge whose span descriptor corresponds to those start and finish vertices?". If the answer to that question is "no", the function goes to step 1.

However, if the answer to that question is "yes", the function then (at step 6), changes the marking of the currently analysed phrase from non-fully analysed to fully analysed, and (at step 7), asks the question "is there a non-fully analysed phrase?". If the answer to that question is "no", the function deems the current content of the store to be the required set of grammar rules and exits, but if the answer to that question is "yes", the function goes to step 2.

In this way, the required set of grammar rules is built up until it is sufficient to analyse the highest ranking non-fully analysed phrase, and by changing the marking to fully analysed, this ensures that analysed phrases are not re-analysed.

In a variant of this first embodiment, in which the ranked alternations have a membership indicator initially set at "non-member of the required set of rules", step 1, instead of transferring the current highest ranking alternation(s) to a separate store, toggles the membership indicator of the highest ranking "non-member" alternation(s) to "member(s)", step 2 primes the agenda of the chart parser with those alternations currently indicated as being members of the required set of grammar rules, and step 6 deems all alternations having their membership indicators set at "member" to constitute the required set of rules.

In respect of the second aspect of the present invention, the user data 171 constitutes a store for storing a set of phrases in a particular language. In practice, the user data 171 will store the corpus of phrase translation pairs, and the set of phrases will be selected from the corpus, either by a user or by a selection program contained within other programs 173. One or more programs contained within other programs 173 constitute in respect of this second aspect, a grammar rule generator; an analysis generator for generating analyses; means for ascertaining alternations of the analyses; means for forming a ranked list of alternations in accordance with a predetermined criterion; alternation selection means; and means for ascertaining, for each phrase of the set of phrases, whether there exists at least one analysis corresponding to the current list of selected alternations acting as grammar rules.

As described above, the modified chart parser algorithm of the present invention will operate until the agenda is empty, and no account is taken of the numbers of edges contained within the packed edges in the chart. In a variant, to reduce the amount of computing resource that would otherwise be required, i.e. memory, processor cycles etc., the algorithm includes a limiter process. This process maintains respective counts of the number of edges contained in each packed edge, and, if the addition of an edge to a packed edge would cause the count to exceed a predetermined limit, then that packed edge is deemed to be full and no more edges are added to it.

A modification of this first embodiment enables the induction of bilingual alternation pairs (grammar rule pairs) which can be used to provide a surface analysis of source and target phrases from a translation pair corpus. This bilingual problem has a number of differences whose solutions require extensions to the monolingual approach.

A first difference is that whereas, in the monolingual case, alternations are counted and ranked, in the bilingual case it is required to count and rank alternation pairs. Thus, it is required to find all possible alternation pairs that could have contributed to the translation of a given source sentence into a given target sentence.

First, the separate monolingual alternations are found for the source and target languages. Then, the source and target monolingual alternations are processed together to find aligned pairs of alternations (grammar rule pairs). In order for a pair of alternations to be deemed to be aligned, also referred herein as admissible, in addition to each of its source and target alternations being a valid monolingual rule, the source and target alternations must have the same common number of variables and a one to one alignment must exist between the variables. An algorithm for finding aligned pairs is described below.

All possible monolingual analyses are generated exactly as in the monolingual case for both the source and the target phrases. It has already been described how to count the monolingual parts of the alternation pairs that contribute to this. It therefore remains to find all admissible source-target pairs of alternations and to count the number of times that they could have taken part in the translation of each example.

The algorithm begins by identifying the criteria which indicate whether a source edge and a target edge could correspond to source and target sides of the same synchronised grammar rule pair. When this is possible, the source and target edges are said to be "alignable".

To determine whether the source and target edges are alignable, a "signature" is associated with each edge, such that a source edge and a target edge are alignable, if and only if they have the same signature. A method for creating these signatures will now be described.

For a source and target pair of edges to be alignable, their head words must be aligned. Further, they must have the same number of variable daughters and there must exist a one to one mapping between the source daughters and the target daughters.

Each daughter will be associated with a packed edge. The packed edge will represent possible analyses of some defined span in the text. Each daughter within an individual edge can therefore be considered to have a span. Words within this span will include some subset of the head words. For a daughter within a source edge to be alignable with a daughter in a target edge, it is necessary and sufficient that the source head words included in the source daughter's span and the target head words included in the target daughter's span be aligned with one another.

Therefore, it is required that the signatures are to be the same for two edges if and only if
the head words associated with the two edges are aligned,
the two edges have the same number of variable or aligned daughters (no account being taken of literal daughters), and
it is possible to find a one to one alignment between the source and target daughters such that the sets of head words spanned by aligned pairs of daughters are aligned with one another.

The algorithm begins to build the signature by counting the number of source-target head word pairs, say "n", and assigning a respective unique n-bit word (integer) to each source-target head word pair. Each n-bit word has a respective unique bit which is set to one for its respective source-target head word pair, e.g. 00000001, 00000010, 00000100, etc. Any arbitrary subset of aligned head word pairs is represented by the arithmetic sum of the integers for each head word pair in the subset, e.g. 00010101. The sum of these integers representing a subset of head word pairs is called the "head word subset ID".

Since each packed edge has a defined span, it will cover a defined set of head words and therefore a head word subset ID can be assigned to each packed edge.

Since each daughter in an individual edge is associated with a span of the text, a head word subset ID can be assigned to each daughter within an edge.

In accordance with the present invention, the signature of an edge is formed as the list, referred to as the signature list of that edge, of head word subset IDs for each of the daughters of that edge and the head word subset ID for the text spanned by the edge, sorted into numeric order.

In the preferred embodiment, a signature *string* is formed, which is simply the concatenation of the respective n-bit words representing head word subset IDs in the signature list with separators between each such n-bit word.

Now that the manner in which the respective signatures are produced for the edges has been described, the algorithm for counting the occurrence of alternation pairs will now be described.

The starting point is the complete set of monolingual analyses for source and target. The respective head word subset IDs are associated with the packed edges.

Next, the packed source edge is found that spans the whole of the source text, as mentioned this is referred to as the top-level edge. For each individual edge in this packed edge, the respective signature is ascertained. These steps are continued recursively, for each of the daughters of the individual edges, and the whole procedure is repeated for the target edges.

The algorithm is now in a position to count the alternation pairs. Again, starting with the top-level packed edges in each language, the intersection of the signatures between the source and target edges is found. Only individual edges with these signatures will be alignable between the pair of packed edges. For each signature in the intersection, the algorithm selects the subset of source edges and the subset of target edges with this signature. Any edge from the source subset can be aligned with any edge from the target subset.

To derive an alternation pair from a pair of alignable edges, it is necessary to find the one to one mapping between the daughters of the edges. This is achieved by ensuring that source and target daughters which share the same head word subset IDs are replaced by aligned variables in the source and the target alternation. The required alternation can now be formed from the edge.

Having extracted the alternations for the top-level edges, the algorithm proceeds recursively to do the same for each daughter of each alignable edge.

As in the monolingual case, the counts for a given alternation pair are aggregated in the following way.

```
AltPairCount=0,
For each individual edge, E,
        EdgeCount=0,
        For each daughter, D,
                let DCount be the count for the given alternation pair for D,
                let EdgeCount=EdgeCount+DCount,
        next daughter,
        let AltPairCount = greater of AltPairCount and EdgeCount,
    next E
    return AltPairCount.
```

In practice, the frequency counts are cached so that they need to be calculated only once per pair of source-target packed edges.

Next, for each of the aligned pairs and for each of the translation pairs in turn, the respective frequencies of the source alternation are found for each analysis of the respective source phrase, as for the monolingual case, and also the respective frequencies of the target alternation. Now, instead of adding all the respective highest frequencies of an alternation for the source phrases, the bilingual case finds, for each aligned pair of alternations and for each translation pair, the lower of the source highest frequency and the target highest frequency. For example, for a given aligned pair of alternations, the source alternation might have for a given source phrase a frequency of 3, and the corresponding target alternation might have for the corresponding target phrase a frequency of 5. The value of the "frequency" of the aligned pair of alternations which is to be used in the aggregation is the lower of these frequencies, namely 3.

Using this process, a ranked list of the aligned pair of alternations is produced, and the required set of aligned grammar rules is generated by a modified form of the monolingual selection algorithm in which the current highest ranking aligned pair(s) of alternations is removed to the required set, and the current required set is used to prime the agendas of a chart parser.

Another difference between the two cases is that in the monolingual case, the criterion for adding the next ranking alternation(s) to the required set is that, after a source language phrase of a translation pair is analysed by the chart parser, the chart does not contain a packed edge (start, finish), whereas in the bilingual case the criterion for adding the next ranking pair(s) of alternations to the required set is that the chart does not contain a packed edge (start, finish) itself containing an edge corresponding to an analysis tree which permits the construction of a phrase in the target language which is identical to the target language phrase of that translation pair.

Thus, the bilingual version of the selection algorithm stops when all the respective charts contain a packed edge corresponding to start/finish, and each respective packed edge contains an edge which, using the alignment data, will generate the corresponding respective target phrases.

In respect of the fourth aspect of the present invention, the user data 171 constitutes a store for storing a set of phrase translation pairs in a given pair of languages (i.e. a first set of phrases in a first language and a corresponding second set of phrases in a second language). In practice, the user data 171 will store a corpus of phrase translation pairs, and the set of phrase translation pairs will be selected from the corpus, either by a user or by a selection program contained within other programs 173. One or more programs contained within other programs 173 constitute, in respect of this fourth aspect, a grammar rule generator; an analysis generator for generating analyses; means for ascertaining alternations of the analyses; means for ascertaining each alternation of the respective alternations of the first set which is aligned with an alternation of the respective alternations of the second set, each such aligned pair being referred to as an alternation pair; means for forming a ranked list of alternation pairs in accordance with a predetermined criterion; alternation selection means, and means for actually or effectively transferring the current highest ranking alternation pair or alternation pairs to a list of grammar rule pairs and then checking whether there exists, for each phrase of each of the stored phrase translation pairs, at least one analysis corresponding to that list of grammar rule pairs.

An alternative embodiment in accordance with the present invention will now be described.

In practice, the corpus will contain many hundreds of phrase translation pairs, but for the purpose of describing this alternative embodiment, it will be assumed that it contains only the two phrase translation pairs,

the cat sees a dog - le chat voit un chien and

a <u>bear</u> <u>eats</u> the <u>fish</u> - un <u>ours</u> <u>mange</u> le <u>poisson</u>.

For the first of these phrase translation pairs

the cat sees a dog - le chat voit un chien

the lexical alignment process identifies the word "cat" in the English phrase and the word "chat" in the French phrase as being aligned words, and marks them in the database as being so aligned. In this specification, aligned words are identified by underlining. Thus in the first phrase translation pair, the aligned words "cat" and "chat" are underlined, and similarly for the aligned words "sees" and "voit", and "dog" and "chien".

Similarly, for the second phrase translation pair

a <u>bear</u> <u>eats</u> the <u>fish</u> - un <u>ours</u> <u>mange</u> le <u>poisson</u>.

the aligned words are identified by underlining.

The method of this alternative embodiment begins, as before, by assuming that aligned words play the role of headwords, also referred to as heads, in the respective grammars.

The next step of the method of the present invention performs monolingual analysis of the corresponding phrases. Thus, for the first phrase translation pair, the phrase "the <u>cat</u> <u>sees</u> a <u>dog</u>", which constitutes a sequence of words some of which have been marked as heads, is applied as the input to an English analyser, which constitutes a dependency representation generator of the present invention. This can be expressed alternatively as a monolingual (English) analysis is performed upon the phrase.

The analyser generates a set of all topologically permitted (i.e. legal) analyses, each analysis constituting a dependency representation of the present invention and being in the form of a planar tree wherein all non-headwords, also referred to as literals, are leaves. In a variant, a counter is provided which is incremented for each analysis generated, and the analyser is arranged to check each generated analysis to see whether it consists of a single headword which has every other word as a daughter and to cease to generate further analyses when the count (running total) of generated analyses reaches a predetermined value, provided that at that point there exists such a generated analysis consisting of a single headword which has every other word as a daughter, but if this proviso is not satisfied the analyser continues to generate further analyses until there does exist such a generated analysis.

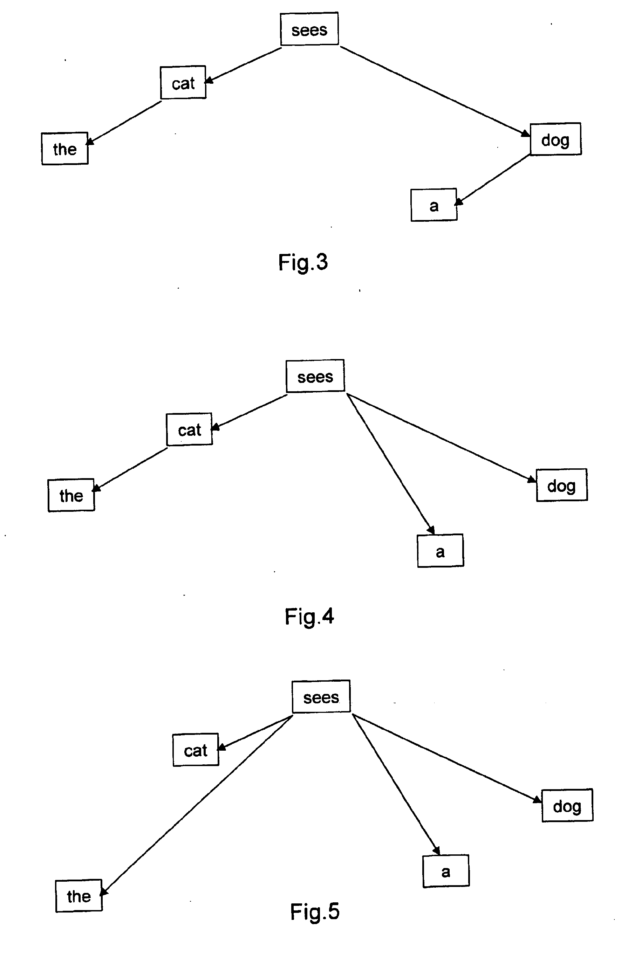

The analyses shown in Figures 3 to 40 are expressed by the following respective notations

Figure 3    ((the <u>cat</u>) <u>sees</u> (a <u>dog</u>)),
Figure 4    ((the <u>cat</u>) <u>sees</u> a (<u>dog</u>)),
Figure 5    (the (<u>cat</u>) <u>sees</u> a (<u>dog</u>)),

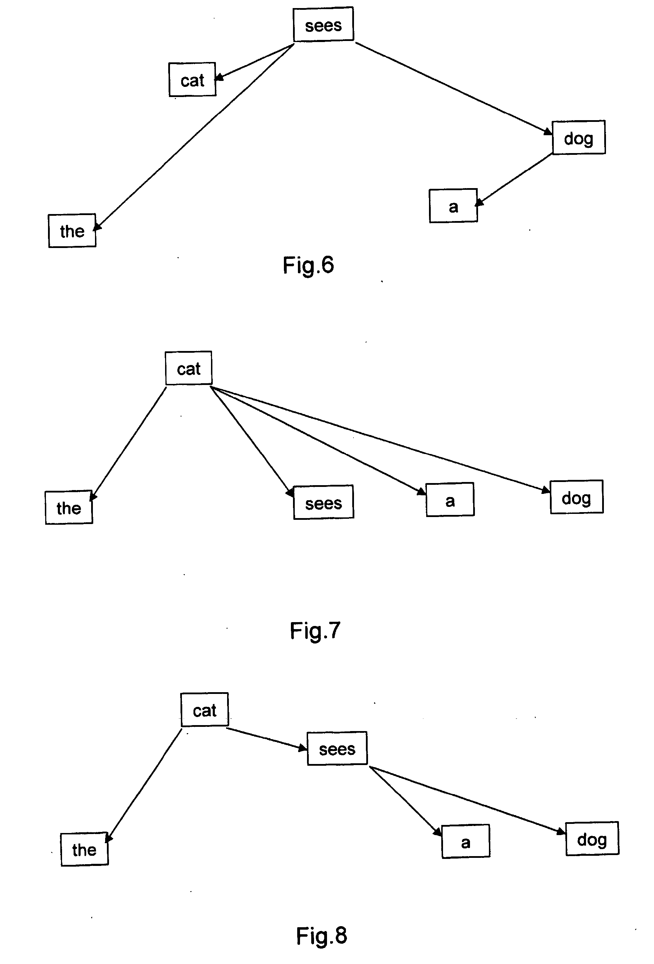

Figure 6    (the (<u>cat</u>) <u>sees</u> (a <u>dog</u>)).
Figure 7    (the <u>cat</u> (<u>sees</u>) a (<u>dog</u>)),
Figure 8    (the <u>cat</u> (<u>sees</u> a (<u>dog</u>)),

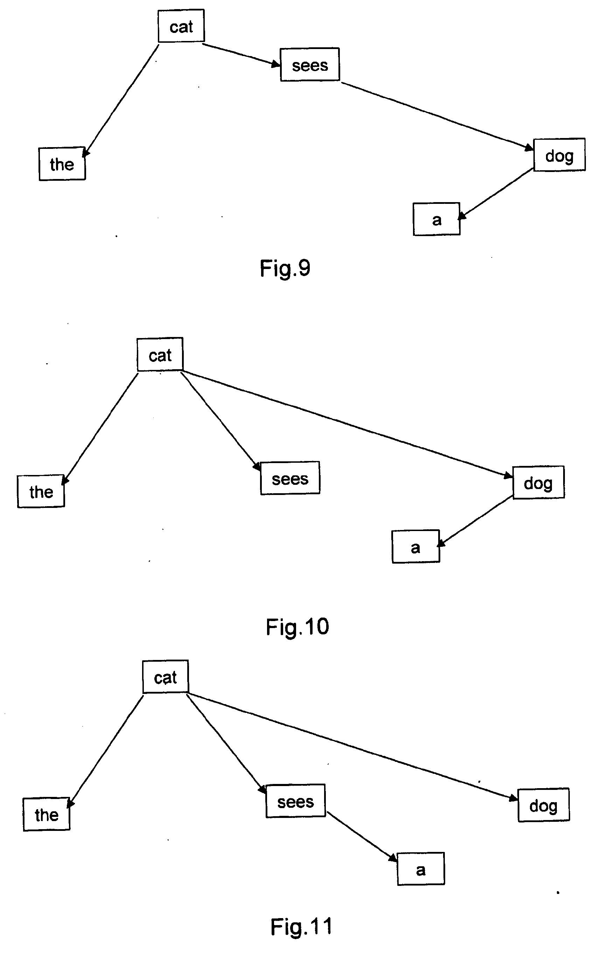

Figure 9    (the <u>cat</u> (<u>sees</u> (a <u>dog</u>)),
Figure 10   (the <u>cat</u> (<u>sees</u>) (a <u>dog</u>)),
Figure 11   (the <u>cat</u> (<u>sees</u> a) (<u>dog</u>)),

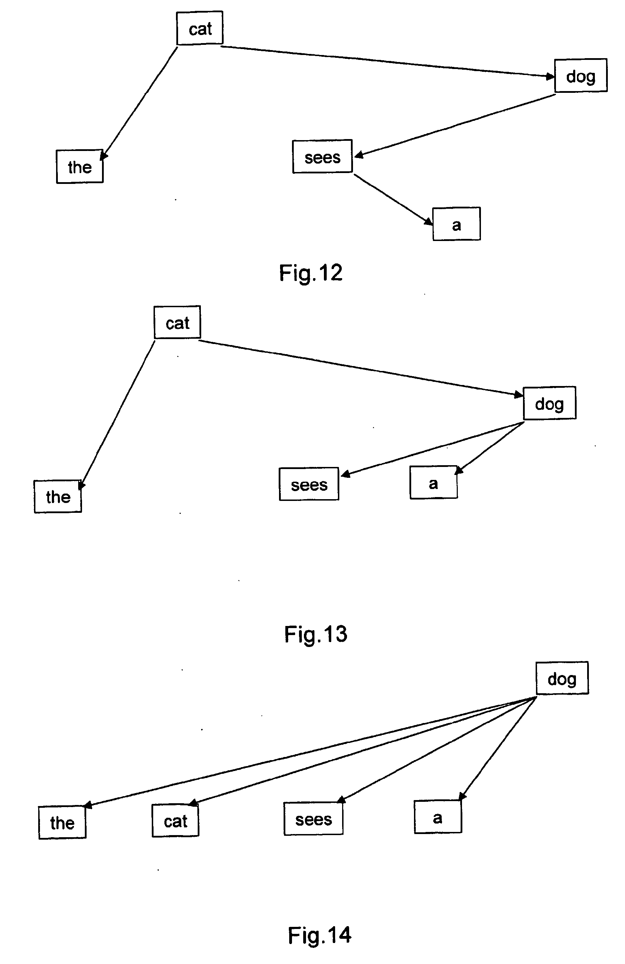

Figure 12   (the <u>cat</u> ((<u>sees</u> a) <u>dog</u>)),
Figure 13   (the <u>cat</u> ((<u>sees</u>) (a <u>dog</u>))),
Figure 14   (the (<u>cat</u>) (<u>sees</u> a <u>dog</u>),

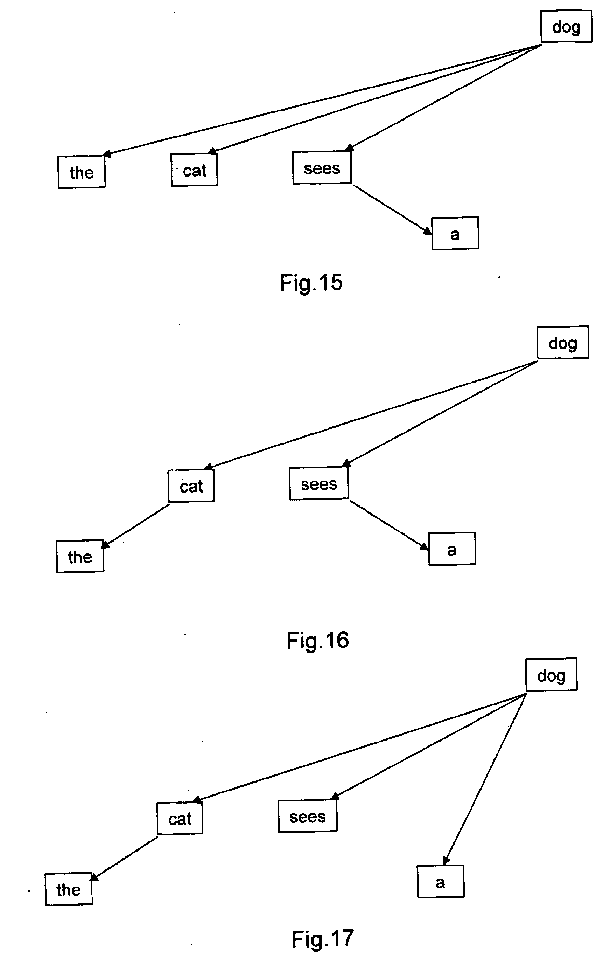

Figure 15   (the (<u>cat</u>) (sees a) <u>dog</u>),
Figure 16   ((the <u>cat</u>) (<u>sees</u> a) <u>dog</u>),
Figure 17   ((the <u>cat</u>) (<u>sees</u>) a <u>dog</u>),

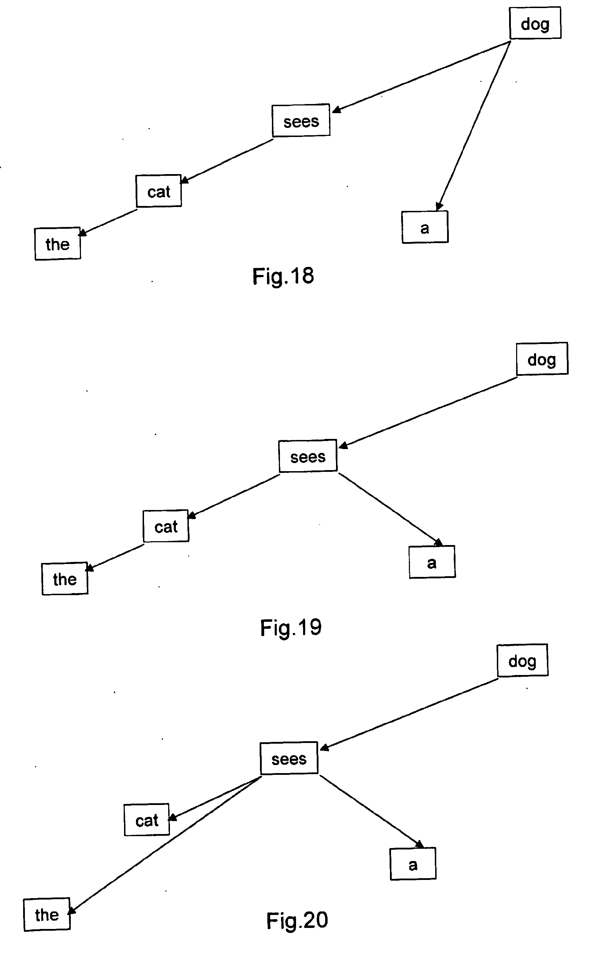

Figure 18   (((the <u>cat</u>) <u>sees</u>) a <u>dog</u>),
Figure 19   (((the <u>cat</u>) <u>sees</u> a) <u>dog</u>),
Figure 20   ((the (<u>cat</u>) <u>sees</u> a) <u>dog</u>),

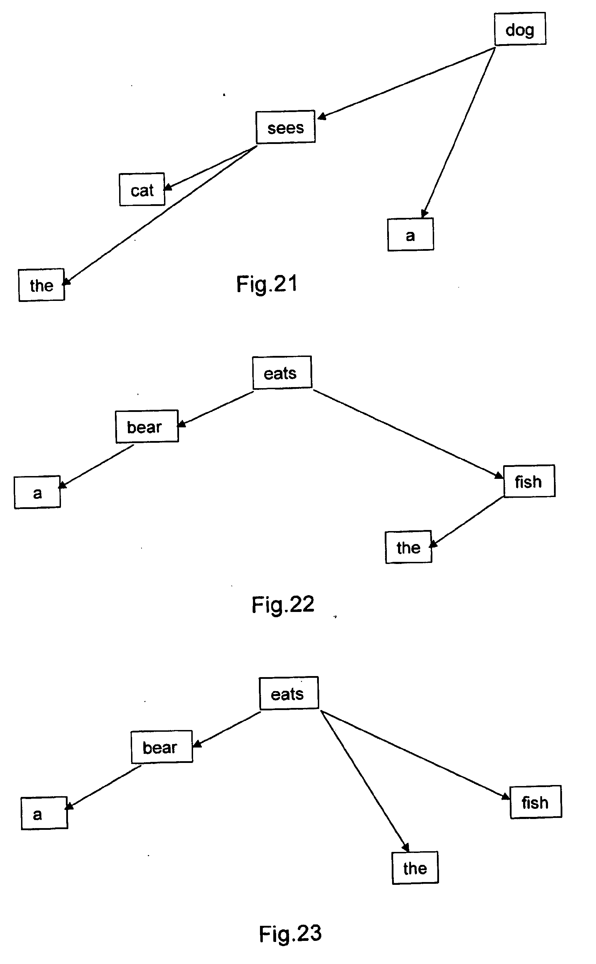

Figure 21   ((the (<u>cat</u>) <u>sees</u>) a <u>dog</u>),
Figure 22   ((a <u>bear</u>) <u>eats</u> (the <u>fish</u>)),
Figure 23   ((a <u>bear</u>) <u>eats</u> the (<u>fish</u>)),

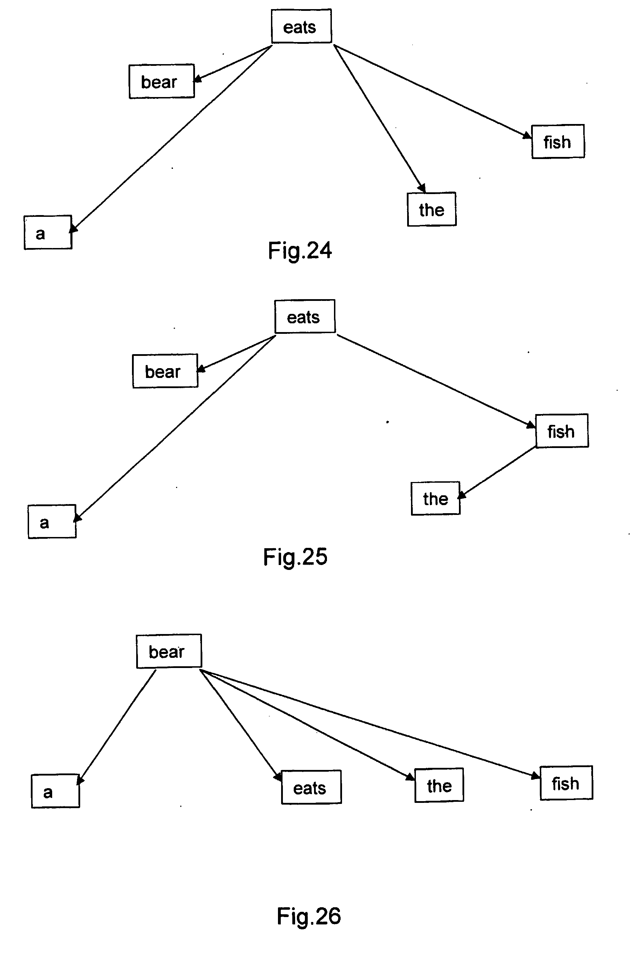

Figure 24   (a (<u>bear</u>) <u>eats</u> the (<u>fish</u>)),
Figure 25   (a (<u>bear</u>) <u>eats</u> (the <u>fish</u>)),
Figure 26   (a <u>bear</u> (<u>eats</u>) the (<u>fish</u>)),

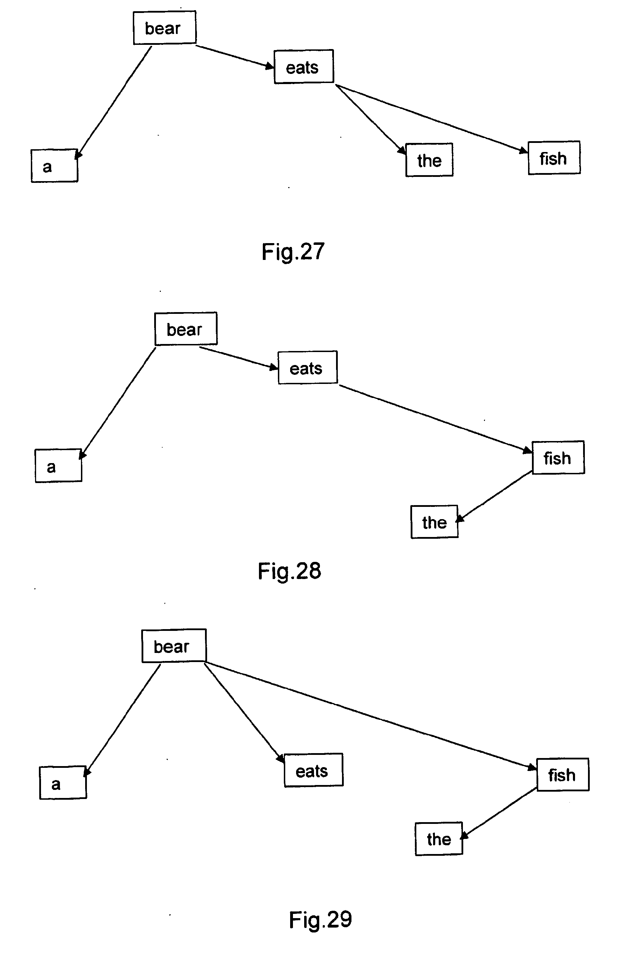

Figure 27   (a <u>bear</u> (<u>eats</u> the (<u>fish</u>)),
Figure 28   (a <u>bear</u> (<u>eats</u> (the <u>fish</u>)),
Figure 29   (a <u>bear</u> (<u>eats</u> (the <u>fish</u>)),

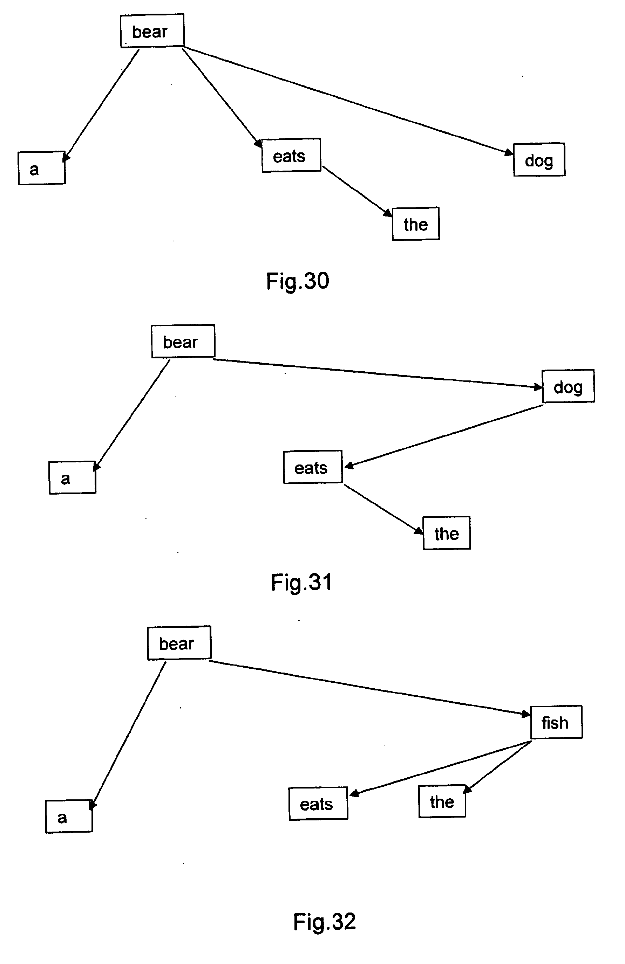

Figure 30   (a <u>bear</u> (<u>eats</u> the) (<u>fish</u>)),
Figure 31   (a <u>bear</u> ((eats the) <u>fish</u>)),

Figure 32    (a bear ((eats) (the fish))),

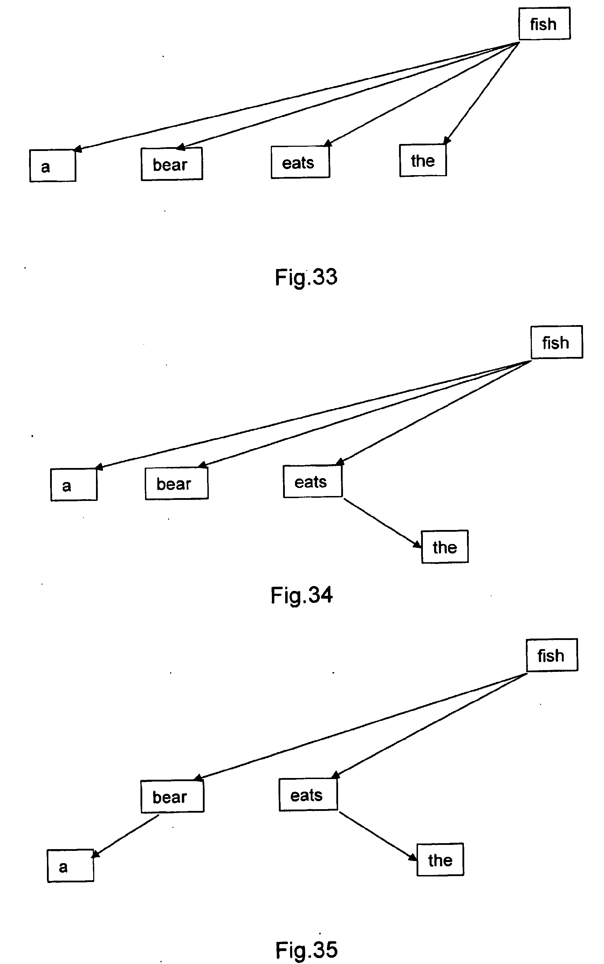

Figure 33    (a (bear) (eats) the fish),
Figure 34    (a (bear) (eats the) fish),
Figure 35    ((a bear) (eats the) fish),

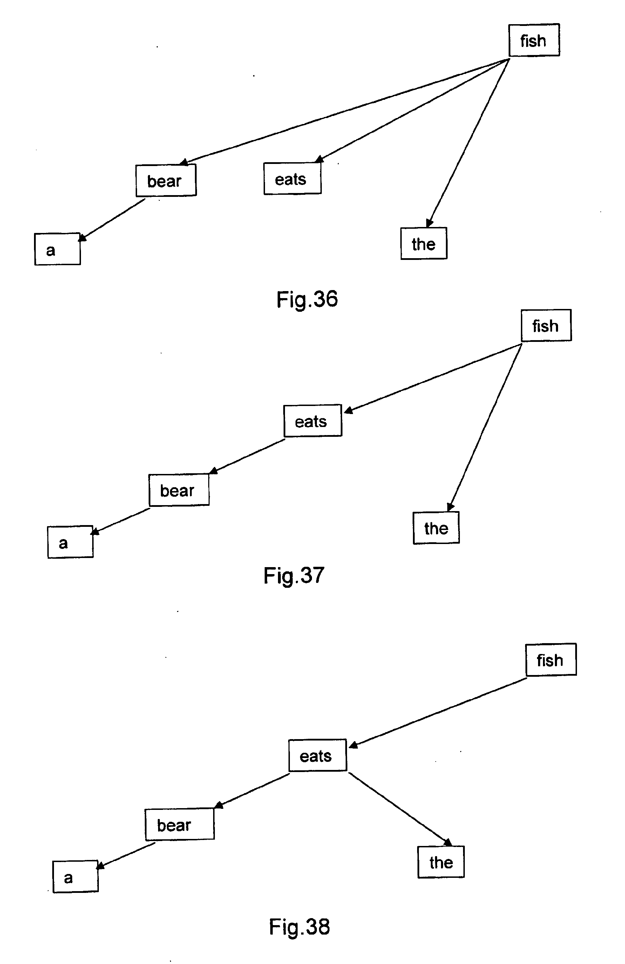

Figure 36    ((a bear) (eats) the fish),
Figure 37    (((a bear) eats) the fish),
Figure 38    (((a bear) eats the) fish),

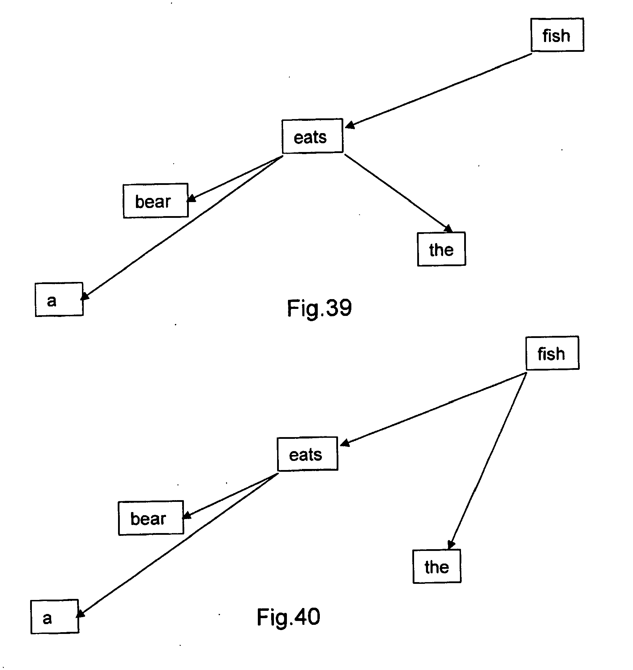

Figure 39    ((a (bear) eats the) fish),
Figure 40    ((a (bear) eats) the fish).

The next steps in the method of the present invention are:

to take each of the analyses in turn;
to decompose it to determine, i.e. ascertain, the alternations;
to count the number of times that each of the alternations is used in the analysis under consideration;
to assign as the "highest frequency" of an alternation, the greatest number of times that that alternation appears in any of the set of analyses for that phrase; and
to assign as the "aggregate highest frequency" for an alternation, the sum of the frequencies of that alternation for each phrase in the corpus.

Thus, for the analysis of Figure 3, the occurrences of the alternations are

$$\text{"the } h \text{"} \qquad (1),$$

$$\text{"a } h \text{"} \qquad (1),$$

$$\text{"X } h \text{ Y"} \qquad (1),$$

where $h$ is a symbol representing the head of that analysis, and the symbols "X" and "Y" represent placeholders, as is known in the art. The sum of the separate alternations of each analysis for this particular phrase will always be three, since there are three heads.

For the analysis of Figure 4, the occurrences of the alternations are

$$\text{"the } h \text{"} \qquad (1),$$

$$\text{"X } h \text{ a Y"} \qquad (1),$$

$$\text{"} h \text{"} \qquad (1).$$

For the analysis of Figure 5, the occurrences of the alternations are

$$\text{"} h \text{"} \qquad (2),$$

$$\text{"the X } h \text{ a Y"} \qquad (1).$$

For the analysis of Figure 6, the occurrences of the alternations are

$$\text{"}\boldsymbol{h}\text{"} \qquad\qquad (1),$$

$$\text{"the X }\boldsymbol{h}\text{ Y"} \qquad\qquad (1),$$

$$\text{"a }\boldsymbol{h}\text{"} \qquad\qquad (1).$$

For the analysis of Figure 7, the occurrences of the alternations are

$$\text{"the }\boldsymbol{h}\text{ X a Y"} \qquad\qquad (1),$$

$$\text{"}\boldsymbol{h}\text{"} \qquad\qquad (2).$$

For the analysis of Figure 8, the occurrences of the alternations are

$$\text{"the }\boldsymbol{h}\text{ X"} \qquad\qquad (1),$$

$$\text{"}\boldsymbol{h}\text{ a X"} \qquad\qquad (1),$$

$$\text{"}\boldsymbol{h}\text{"} \qquad\qquad (1).$$

For the analysis of Figure 9, the occurrences of the alternations are

$$\text{"the }\boldsymbol{h}\text{ X"} \qquad\qquad (1),$$

$$\text{"}\boldsymbol{h}\text{ X"} \qquad\qquad (1),$$

$$\text{"a }\boldsymbol{h}\text{"} \qquad\qquad (1).$$

For the analysis of Figure 10, the occurrences of the alternations are

$$\text{"the }\boldsymbol{h}\text{ X Y"} \qquad\qquad (1),$$

$$\text{"}\boldsymbol{h}\text{"} \qquad\qquad (1),$$

$$\text{"a }\boldsymbol{h}\text{"} \qquad\qquad (1).$$

For the analysis of Figure 11, the occurrences of the alternations are

$$\text{"the } h \text{ X Y"} \qquad (1),$$

$$\text{"} h \text{ a"} \qquad (1),$$

$$\text{"} h \text{"} \qquad (1).$$

For the analysis of Figure 12, the occurrences of the alternations are

$$\text{"the } h \text{ X"} \qquad (1),$$

$$\text{"X } h \text{"} \qquad (1),$$

$$\text{"} h \text{ a"} \qquad (1).$$

For the analysis of Figure 13, the occurrences of the alternations are

$$\text{"the } h \text{ X"} \qquad (1),$$

$$\text{"X } h \text{"} \qquad (1),$$

$$\text{"a } h \text{"} \qquad (1).$$

For the analysis of Figure 14, the occurrences of the alternations are

$$\text{"the X Y a } h \text{"} \qquad (1)$$

$$\text{"} h \text{"} \qquad (2).$$

For the analysis of Figure 15, the occurrences of the alternations are

$$\text{"the X Y } h \text{"} \qquad (1),$$

$$\text{"} h \text{ a"} \qquad (1),$$

$$\text{"} h \text{"} \qquad (1).$$

For the analysis of Figure 16, the occurrences of the alternations are

$$\text{"X Y } h\text{"} \qquad (1),$$

$$\text{"the } h\text{"} \qquad (1),$$

$$\text{"} h \text{ a"} \qquad (1).$$

For the analysis of Figure 17, the occurrences of the alternations are

$$\text{"X Y a } h\text{"} \qquad (1),$$

$$\text{"the } h\text{",} \qquad (1),$$

$$\text{"} h\text{"} \qquad (1).$$

For the analysis of Figure 18, the occurrences of the alternations are

$$\text{"X a } h\text{"} \qquad (1),$$

$$\text{"the X } h\text{"} \qquad (1),$$

$$\text{"a } h\text{"} \qquad (1).$$

For the analysis of Figure 19, the occurrences of the alternations are

$$\text{"X } h\text{"} \qquad (1),$$

$$\text{"the X } h\text{"} \qquad (1),$$

$$\text{"} h \text{ a"} \qquad (1).$$

For the analysis of Figure 20, the occurrences of the alternations are

$$\text{"X } h\text{"} \qquad (1),$$

$$\text{"the X } h \text{ a"} \qquad (1),$$

$$\text{"} h\text{"} \qquad (1).$$

For the analysis of Figure 21, the occurrences of the alternations are

$$\text{"X a } h \text{"} \qquad (1),$$

$$\text{"the X } h \text{"} \qquad (1),$$

$$\text{"the } h \text{"} \qquad (1).$$

Similarly, for the second pair of phrases
a bear eats the fish - un ours mange le poisson
and again considering only applying the English analyser to the English phrase " a bear eats the fish", there are again eighteen possible analyses shown respectively in Figures 22 to 40.
Thus, for the analysis of Figure 22, the occurrences of the alternations are

$$\text{"a } h \text{"} \qquad (1),$$

$$\text{"the } h \text{"} \qquad (1),$$

$$\text{"X } h \text{ Y"} \qquad (1).$$

For the analysis of Figure 23, the occurrences of the alternations are

$$\text{"a } h \text{"} \qquad (1),$$

$$\text{"X } h \text{ the Y"} \qquad (1),$$

$$\text{"} h \text{"} \qquad (1).$$

For the analysis of Figure 24, the occurrences of the alternations are

$$\text{"} h \text{"} \qquad (2),$$

$$\text{"a X } h \text{ the Y"} \qquad (1).$$

For the analysis of Figure 25, the occurrences of the alternations are

$$\text{"} h \text{"} \qquad (1),$$

$$\text{"a X } h \text{ Y"} \qquad (1),$$

$$\text{"the } \textbf{\textit{h}}\text{"} \qquad (1).$$

For the analysis of Figure 26, the occurrences of the alternations are

$$\text{"a } \textbf{\textit{h}} \text{ X the Y"} \qquad (1),$$

$$\text{"}\textbf{\textit{h}}\text{"} \qquad (2).$$

For the analysis of Figure 27, the occurrences of the alternations are

$$\text{"a } \textbf{\textit{h}} \text{ X"} \qquad (1),$$

$$\text{"}\textbf{\textit{h}}\text{ the X"} \qquad (1),$$

$$\text{"}\textbf{\textit{h}}\text{"} \qquad (1).$$

For the analysis of Figure 28, the occurrences of the alternations are

$$\text{"a } \textbf{\textit{h}} \text{ X"} \qquad (1),$$

$$\text{"}\textbf{\textit{h}}\text{ X"} \qquad (1),$$

$$\text{"the } \textbf{\textit{h}}\text{"} \qquad (1).$$

For the analysis of Figure 29, the occurrences of the alternations are

$$\text{"a } \textbf{\textit{h}} \text{ X Y"} \qquad (1),$$

$$\text{"}\textbf{\textit{h}}\text{"} \qquad (1),$$

$$\text{"the } \textbf{\textit{h}}\text{"} \qquad (1).$$

For the analysis of Figure 30, the occurrences of the alternations are

$$\text{"a } \textbf{\textit{h}} \text{ X Y"} \qquad (1),$$

$$\text{"}h\text{ the"} \qquad (1),$$

$$\text{"}h\text{"} \qquad (1).$$

For the analysis of Figure 31, the occurrences of the alternations are

$$\text{"a }h\text{ X"} \qquad (1),$$

$$\text{"X }h\text{"} \qquad (1),$$

$$\text{"}h\text{ the"} \qquad (1).$$

For the analysis of Figure 32, the occurrences of the alternations are

$$\text{"a }h\text{ X"} \qquad (1),$$

$$\text{"X }h\text{"} \qquad (1),$$

$$\text{"the }h\text{"} \qquad (1).$$

For the analysis of Figure 33, the occurrences of the alternations are

$$\text{"a X Y the }h\text{"} \qquad (1)$$

$$\text{"}h\text{"} \qquad (2).$$

For the analysis of Figure 34, the occurrences of the alternations are

$$\text{"a X Y }h\text{"} \qquad (1),$$

$$\text{"}h\text{ the"} \qquad (1),$$

$$\text{"}h\text{"} \qquad (1).$$

For the analysis of Figure 35, the occurrences of the alternations are

$$\text{"X Y }h\text{"} \qquad (1),$$

$$\text{"the } h\text{"} \qquad (1),$$

$$\text{"} h \text{ the"} \qquad (1).$$

For the analysis of Figure 36, the occurrences of the alternations are

$$\text{"X Y the } h\text{"} \qquad (1),$$

$$\text{"a } h\text{",} \qquad (1),$$

$$\text{"} h\text{"} \qquad (1).$$

For the analysis of Figure 37, the occurrences of the alternations are

$$\text{"X the } h\text{"} \qquad (1),$$

$$\text{"a X } h\text{"} \qquad (1),$$

$$\text{"the } h\text{"} \qquad (1).$$

For the analysis of Figure 38, the occurrences of the alternations are

$$\text{"X } h\text{"} \qquad (1),$$

$$\text{"a X } h\text{"} \qquad (1),$$

$$\text{"} h \text{ the"} \qquad (1).$$

For the analysis of Figure 39, the occurrences of the alternations are

$$\text{"X } h\text{"} \qquad (1),$$

$$\text{"a X } h \text{ the"} \qquad (1),$$

$$\text{"} h\text{"} \qquad (1).$$

For the analysis of Figure 40, the occurrences of the alternations are

$$\text{"X the } h\text{"} \qquad . \qquad (1),$$

$$\text{"a X } h\text{"} \qquad (1),$$

$$\text{"the } h\text{"} \qquad (1).$$

For these two phrase translation pairs the alternation frequencies are, ranked greatest first:

| Alternation | first pair/second pair frequency | overall frequency |
|---|---|---|
| *h* | (2/2) | (4) |
| X *h* | (1/1) | (2) |
| *h* X | (1/1) | (2) |
| the *h* | (1/1) | (2) |
| a *h* | (1/1) | (2) |
| W *h* Y | (1/1) | (2) |
| X Y *h* | (1/1) | (2) |
| *h* the | (0/1) | (1) |
| *h* a | (1/0) | (1) |
| the *h* X | (1/0) | (1) |
| the X *h* | (1/0) | (1) |
| X the *h* | (0/1) | (1) |
| the *h* X Y | (1/0) | (1) |
| a *h* X Y | (0/1) | (1) |
| *h* the X | (0/1) | (1) |
| *h* a X | (1/0) | (1) |
| X Y the *h* | (0/1) | (1) |
| X Y a *h* | (1/0) | (1) |
| X *h* the Y | (0/1) | (1) |
| the X Y *h* | (1/0) | (1) |
| the X *h* Y | (1/0) | (1) |
| the *h* X a Y | (1/0) | (1) |
| a X *h* the Y | (0/1) | (1) |
| the X Y a *h* | (1/0) | (1) |
| the X *h* a | (1/0) | (1) |
| the X *h* a Y | (1/0) | (1) |
| X a *h* | (1/0) | (1) |
| a X *h* | (0/1) | (1) |
| a *h* X | (0/1) | (1) |
| a X *h* the | (0/1) | (1) |
| a X Y *h* | (0/1) | (1) |
| a X Y the *h* | (0/1) | (1) |
| X *h* a Y | (1/0) | (1) |

The alternations are selected in rank order to form the required set of grammar rules, and selection ceases when the required set comprises just the first three alternations.

Appendix A

The following steps show part of the full application of the algorithm of the present invention in producing chart entries for the input text "the <dog> <sees> the <cat>" where the <word> indicates a headword. To show all the steps, that the algorithm performs until the agenda becomes empty would take many pages, so, for convenience, a sufficient number of steps are shown to illustrate the ten features of the algorithm. As an aid in understanding the operation of the algorithm, these features are given the identifiers *A1, A2, A3, B1, B2, B21, B31, B32, B41 and B42* in the algorithm and in the following steps.

When the algorithm performs feature *A2*, i.e. creation from a removed edge of an extended edge for a packed edge in the chart that can extend the removed edge at an extendible side, the newly created extended edge does not contain the packed edge, per se, which can contain many individual edges, but rather a pointer to the packed edge. If, for example, the removed edge has a span descriptor (SD) of (2,3), then, if the removed edge is left active, it can be extended by a packed edge having a span descriptor (SD) of (1,2) and having the identifier "PE (1,2)", referred to herein as the packed edge PE (1,2), or by a packed edge PE (0,2), and if the removed edge is right active, it can be extended by any packed edge PE (3,m), and the newly created extended edge will contain a respective pointer having the identifier "P(1,2)", "P(0,2)" or "P(3,m)", as appropriate. It will be understood that the packed edge is thus a daughter (D) of the newly created extended edge, and of any subsequently created from this edge, and that the pointer associates that daughter with the actual packed edge in the chart.

| Action | Agenda after action | Chart after action |
|---|---|---|
| Prime with inactive heads | \|<dog>\| : (1,2) : (inactive, left-right augmentable)<br>\|<sees>\| : (2,3) : (inactive, left-right augmentable)<br>\|<cat>\| : (4,5) : (inactive, left-right augmentable) | empty |
| 1. The edge "\|<dog>\| : (1,2) : (inactive, left-right augmentable)" is removed from the top of the agenda. It is inactive, so look in the chart to see whether there is a PE having the same SD. The chart is empty, so create (*B2*) a PE having SD of (1,2), and add the edge. Also, look in the chart to see whether there is any active edge that the new PE can extend. There is none. Since the edge is inactive, and is marked as left-right augmentable, create (*B31, B32*) new, active edges from it by adding (augmenting) daughters (augmentations) to the left and the right of the inactive edge. These new edges are added to the top of the agenda for processing (shown in bold). | (*B31*) **X \|<dog>\| : (1,2) : (left active, left-right augmentable)**<br>(*B32*) **\|<dog>\| Y : (1,2) : (right active, right augmentable)**<br>(*B31*) **the \|<dog>\| : (1,2) : (left active, left-right augmentable)**<br>\|<sees>\| : (2,3) : (inactive, left-right augmentable)<br>\|<cat>\| : (4,5) : (inactive, left-right augmentable) | (*B2*) PE (1,2) containing: \|<dog>\| : (1,2) : (inactive, left-right augmentable) |
| 2. The edge " X \|<dog>\| : (1,2) : (left active, left-right augmentable)" is removed from the top of the agenda. It is left active with a variable (X) required. There is no PE that can extend the edge at its left, so just (*A3*) add the removed edge to the chart. | \|<dog>\| Y : (1,2) : (right active, right augmentable)<br>the \|<dog>\| : (1,2) : (left active, left-right augmentable)<br>\|<sees>\| : (2,3) : (inactive, left-right augmentable)<br>\|<cat>\| : (4,5) : (inactive, left-right augmentable) | PE (1,2) containing: \|<dog>\| : (1,2) : (inactive, left-right augmentable)<br>(*A3*) X \|<dog>\| : (1,2) : (left active, left-right augmentable) |

(continued)

| Action | Agenda after action | Chart after action |
|---|---|---|
| 3. The edge "\|<dog>\| Y : (1,2) : (right active, right augmentable)" is removed from the top of the agenda. It is right active and the right daughter is a variable (Y), so check to see whether there is a PE that can extend the edge at its right. There is not, so just (*A3*) add the removed edge to the chart. | the \|<dog>\| : (1,2) : (left active, left-right augmentable)<br>\|<sees>\| : (2,3) : (inactive, left-right augmentable)<br>\|<cat>\| : (4,5) : (inactive, left-right augmentable) | PE (1,2) containing: \|<dog>\| : (1,2) : (inactive, left-right augmentable)<br><br>X \|<dog>\| : (1,2) : (left active, left-right augmentable) (*A3*) \|<dog>\| Y : (1,2) : (right active, right augmentable) |
| 4. The edge " the \|<dog>\| : (1,2) : (left active, left-right augmentable)" is removed from the top of the agenda. It is left active, but this time requires a literal (the). The literal is present in the text, so the removed edge is extended (*A1*) and added to the agenda (shown in <u>underline</u>). The original removed edge is added to the chart. | (*A1*) I the <u>\|<dog>\| : (0,2) : (inactive, left-right augmentable)</u><br>\|<sees>\| : (2,3) : (inactive, left-right augmentable)<br>\|<cat>\| : (4,5) : (inactive, left-right augmentable) | PE (1,2) containing:<br>\|<dog>\| : (1,2) : (inactive, left-right augmentable)<br>X \|<dog>\| : (1,2) : (left active, left-right augmentable)<br>\|<dog>\| Y : (1,2) : (right active, right augmentable)<br>(*A3*) the \|<dog>\| : (1,2) : (left active, left-right augmentable) |
| 5. The edge "\| the <dog>\| : (0,2) : (inactive, left-right augmentable)" is | (*B32*) **\| the <dog>\| Y : (0,2) : (right active, right augmentable)**<br>\|<sees>\| : (2,3) : (inactive, left-right augmentable) | PE (1,2) containing:<br>\|<dog>\| : (1,2) : (inactive, left-right augmentable) |
| removed from the top of the agenda. It is inactive, so look in the chart to see whether there is a PE having the same SD (0,2). There is none. Create (*B2*) a PE having SD of (0,2) and add the edge to it. Also, look in the chart to see whether there is any active edge that the · new PE can extend. There is none. Since the edge is inactive, and is marked as left-right augmentable, create (*B32*) a new, active edge, and add this to the agenda (shown in bold). A new left. active edge cannot be created since there are no more words to the left. | \|<cat>\| : (4,5) : (inactive, left-right augmentable) | X \|<dog>\| : (1,2) : (left active, left-right augmentable)<br>\|<dog>\| Y : (1,2) : (right active, right augmentable)<br>the \|<dog>\| : (1,2) : (left active, left-right augmentable)<br>(*B2*) PE (0,2) containing:<br>\| the <dog>\| : (0,2) : (inactive, left-right augmentable) |

(continued)

| Action | Agenda after action | Chart after action |
|---|---|---|
| 6. The edge "\| the <dog>\| Y : (0,2) : (right active, right augmentable)" is removed from the top of the agenda. It is right active, so check in the input text for a literal, and in the chart to see whether there is a PE having an SD of the format (2,m). There is none. (A3) Add the edge to the chart. | \|<sees>\| : (2,3) : (inactive, left-right augmentable) <br> \|<cat>\| : (4,5) : (inactive, left-right augmentable) | PE (1,2) containing: <br> \|<dog>\| : (1,2) : (inactive, left-right augmentable) <br> X \|<dog>\| : (1,2) : (left active, left-right augmentable) <br> \|<dog>\| Y : (1,2) : (right active, right augmentable) <br> the \|<dog>\| : (1,2) : (left active, left-right augmentable) <br> PE (0,2) containing: <br> \| the <dog>\| : (0,2) : (inactive, left-right augmentable) <br> (*A3*) \| the <dog>\| Y : (0,2) : (right active, right augmentable) |
| 7. The edge "\|<sees>\| : (2,3) : (inactive, left-right augmentable)" is removed from the top of the agenda. It is inactive, so check in the chart for a PE of SD (2,3). Create (*B2*) a PE for SD of (2,3) and add the edge. Create (*B21*) extended edges for active edges in the | (*B21*) \|<dog> (P2,3) \| : (1,3) : (inactive, <u>right augmentable</u>) <br> (*B21*) <u>\|the <dog> (P2,3) I : (0.3) : (inactive, right augmentable)</u> <br> (*B31*) **X \|<sees>\| : (2,3) : (left active, left-right augmentable)** <br> (*B32*) **\|<sees>\| Y : (2,3) : (right active, right augmentable)** <br> (*B32*) **\|<sees>\| the : (2,3) : (right active, right augmentable)** <br> \|<cat>\| : (4,5) : (inactive, left-right augmentable) | PE (1,2) containing: <br> \|<dog>\| : (1,2) : (inactive, left-right augmentable) <br> X \|<dog>\| : (1,2) : (left active, left-right augmentable) <br> <u>\|<dog>\| Y : (1,2) : (right active, right augmentable)</u> <br> the \|<dog>\| : (1,2) : (left active, left-right augmentable) <br> PE (0,2) containing: <br> \| the <dog>\| : (0,2) : (inactive, left-right augmentable) |
| chart (shown in <u>underline</u>) that the new PE can extend and add extended edges to the agenda (shown in <u>underline</u>). Since the edge is also left-right augmentable , create (*B31*, *B32*) new active edges by adding left and right daughters. These new edges are added to the agenda as well (shown in bold). Heads are not allowed to be literals as well, so there is no augmentation to the left with a literal 'dog'. | | <u>\|the <dog>\| Y : (0,2) : (right active, right augmentable)</u> <br> (*B2*) PE (2,3) containing: <br> \|<sees>\| : (2,3) : (inactive, left-right augmentable) |

(continued)

| Action | Agenda after action | Chart after action |
|---|---|---|
| 8. The edge "\|<dog> (P2,3) \| : (1,3) : (inactive; right augmentable)" is removed from the top of the agenda. It is inactive, so check in the chart for a PE of SD (1,3). Create (*B2*) a PE for SD of (1,3) and add the edge. Also, look in the chart to see whether there is any active edge that the new PE can extend. There is none. The edge is also right augmentable. There is one possibility (*B4*) for adding daughters to the right (add a variable), so (*B42*) do this to form a new edge and add it to the agenda (shown in bold). | (*B42*) **\|<dog> (P2,3) \| Z : (1,3) : (right active, right augmentable)** <br> X \|<sees>\| : (2,3) : (left active, left-right augmentable) <br> \|<sees>\| Y : (2,3) : (right active, right augmentable) <br> \|<sees>\| the : (2,3) : (right active, right augmentable) <br> \|<cat>\| : (4,5) : (inactive, left-right augmentable) | PE (1,2) containing: <br> \|<dog>\| : (1,2) : (inactive, left-right augmentable) <br> X \|<dog>\| : (1,2) : (left active, left-right augmentable) <br> \|<dog>\| Y : (1,2) : (right active, right augmentable) <br> the \|<dog>\| : (1,2) : (left active, left-right augmentable) <br> PE (0,2) containing: <br> \| the <dog>\| : (0,2) : (inactive, left-right augmentable) <br> \| the <dog>\| Y : (0,2) : (right active, right augmentable) <br> PE (2,3) containing: <br> \|<sees>\| : (2,3) : (inactive, left-right augmentable) <br> (*B2*) PE (1,3) containing: <br> \|<dog> (P2,3)\| : (1,3) : (inactive, right augmentable) |
| 9. The edge "\|<dog> (P2,3) \| Z : (1,3) : (right active, right augmentable)" is removed from the top of the agenda. It is right active, so check in the input text for a literal, and in the chart to see whether there is a PE having an SD | X \|<sees>\| : (2,3) : (left active, left-right augmentable) <br> \|<sees>\| Y : (2,3) : (right active, right augmentable) <br> \|<sees>\| the : (2,3) : (right active, right augmentable) <br> \|<cat>\| : (4,5) : (inactive, left-right augmentable) | PE (1,2) containing: <br> \|<dog>\| : (1,2) : (inactive, left-right augmentable) <br> X \|<dog>\| : (1,2) : (left active, left-right augmentable) <br> \|<dog>\| Y : (1,2) : (right active, right augmentable) <br> the \|<dog>\| : (1,2) : (left active, left-right augmentable) |
| of the format (3,m). There is none. Add (*A3*) the edge to the chart. | | PE (0,2) containing: <br> \| the <dog>\| : (0,2) : (inactive, left-right augmentable) <br> \| the <dog>\| Y : (0,2) : (right active, right augmentable) <br> PE (2,3) containing: <br> \|<sees>\| : (2,3) : (inactive, left-right augmentable) <br> PE (1,3) containing: <br> \|<dog> (P2,3)\| : (1,3) : (inactive, right augmentable) <br> (*A3*) \|<dog> (P2,3) \| Z : (1,3) : (right active, right augmentable) |

(continued)

| Action | Agenda after action | Chart after action |
|---|---|---|
| 10. The edge " X \|<sees>\| : (2,3) : (left active, left-right augmentable)" is removed from the top of the agenda. It is left active, so check in the input text for a literal, and in the chart to see whether there is a PE having an SD of the format (n,2). There are two (shown in <u>underline</u>). Create (*A2*) extended edges from the removed edge and add them to the agenda (shown in <u>underline</u>). Add the original removed edge to the chart. | (*A2*) <u>\| (P1,2) <sees>\| : (1,3) : (inactive, left-right augmentable)</u><br>(*A2*) <u>\| (P0,2) <sees>\| : (0,3) : (inactive, left-right augmentable)</u><br>\|<sees>\| Y : (2,3) : (right active, right augmentable)<br>\|<sees>\| the : (2,3) : (right active, right augmentable)<br>\|<cat>\| : (4,5) : (inactive, left-right augmentable) | PE (1,2) containing:<br><u>\|<dog>\| : (1.2) : (inactive, left-right augmentable)</u><br>X \|<dog>\| : (1,2) : (left active, left-right augmentable)<br>\|<dog>\| Y : (1,2) : (right active, right augmentable)<br>the \|<dog>\| : (1,2) : (left active, left-right augmentable)<br>PE (0,2) containing:<br><u>\| the <dog>\| : (0,2) : (inactive, left-right augmentable)</u><br>\| the <dog>\| Y : (0,2) : (right active, right augmentable)<br>PE (2,3) containing:<br>\|<sees>\| : (2,3) : (inactive, left-right augmentable)<br>PE (1,3) containing:<br>\|<dog> (P2,3)\| : (1,3) : (inactive, right augmentable)<br>\|<dog> (P2,3)\| Z : (1,3) : (right active, right augmentable)<br>(*A3*) X \|<sees>\| : (2,3) : (left active, left-right augmentable) |
| 11. The edge "\| (P1,2) <sees>\| : (1,3) : (inactive, left-right augmentable)" is removed from the top of the agenda. It is inactive, so check in the chart for a PE of SD (1,3). This PE | (*B41*) **the \| X <sees>\| : (1,3) : (left active, left-right augmentable)**<br>(*B42*) **\| X <sees>\| Y : (1,3) : (left active, right augmentable)**<br>\| (P0,2) <sees>\| : (0,3) : (inactive, left-right augmentable)<br>\|<sees>\| Y : (2,3) : (right active, right augmentable) | PE (1,2) containing:<br>\|<dog>\| : (1,2) : (inactive, left-right augmentable)<br>X \|<dog>\| : (1,2) : (left active, left-right augmentable)<br>\|<dog>\| Y : (1,2) : (right active, right augmentable)<br>the \|<dog>\| : (1,2) : (left active, left-right augmentable) |
| exists, so (*B1*) add the edge to it. | \|<sees>\| the : (2,3) : (right active, right augmentable)<br>\|<cat>\| : (4,5) : (inactive, left-right augmentable) | PE (0,2) containing:<br>\| the <dog>\| : (0,2) : (inactive, left-right augmentable)<br>\| the <dog>\| Y : (0,2) : (right active, right augmentable)<br>PE (2,3) containing:<br>\|<sees>\| : (2,3) : (inactive, left-right augmentable)<br>PE (1,3) containing:<br>\|<dog> (P2,3)\| : (1,3) : (inactive, right augmentable)<br>(*B1*) \| (P1,2) <sees>\| : (1,3) : (inactive, left-right augmentable)<br>\|<dog> (P2,3)\| Z : (1,3) : (right active, right augmentable)<br>X \|<sees>\| : (2,3) : (left active, left-right augmentable) |

**Claims**

1. A method of forming a set of grammar rules for at least one of a given pair of languages, referred to as the required set of grammar rules, comprising the steps:

   (a) acquiring (171) a first set of phrases in one of the pair of languages and a corresponding second set of phrases in the other of the pair of languages, the sets of phrases constituting a set of phrase translation pairs in the given pair of languages; and
   (b) generating (173) a respective set of grammar rules in respect of at least the first set of phrases;
   the method being **characterised by** the steps:
   (c) generating (173), for each member of the or each set of phrases for which a set of grammar rules has been generated under step (b), by use of an analysis generator using the corresponding generated set of grammar rules, a respective set of analyses;
   (d) ascertaining (173), for each of the analyses, the respective alternations thereof;
   (e1) if only one set of grammar rules has been generated under step (b), ranking (173) the alternations in accordance with a predetermined criterion, each such alternation being referred to as an ascertainment result, or
   (e2) if two sets of grammar rules have been generated under step (b), ascertaining each alternation of the respective alternations of said first set of phrases which is aligned with an alternation of the respective alternations of said second set of phrases, and ranking (173) the aligned pair of alternations in accordance with a predetermined criterion, each such aligned pair of alternations being referred to as an ascertainment result; and
   (f) making (173) the highest ranking ascertainment result or ascertainment results a member or members of a set of selected ascertainment results, and similarly for the next highest ranking ascertainment result or ascertainment results, and so on, and ceasing (173) when the set of selected ascertainment results acting as grammar rules has become sufficient such that
   for each of the phrases of the relevant set of phrases, if step (e1) has been performed, or
   for each member of the set of phrase translation pairs, and for each of the phrases of the particular member, if step (e2) has been performed,

   there exists at least one analysis corresponding to the set of selected ascertainment results, whereupon the current list of selected ascertainment results is then deemed to be the required set of grammar rules.

2. A method as claimed in claim 1, wherein the ranking step (e1) comprises the substeps:

   (e1.1) ascertaining (173), for each analysis for a said phrase, respective frequencies of each of its ascertainment results;
   (e1.2) ascertaining (173), for all said analyses of the said phrase, respective highest frequencies of each of the ascertainment results;
   (e1.3) repeating (173) substeps (e1.1) and (e1.2) for each remaining phrase of the relevant set of phrases and ascertaining, for each of the ascertainment results, the sum of the associated respective highest frequencies; and
   (e1.4) allocating (173) to the ascertainment results a ranking in accordance with their respective sums.

3. A method as claimed in claim 1, wherein the ranking step (e2) comprises the substeps:

   (e2.1) ascertaining (173), for each analysis for each phrase of a phrase translation pair, respective frequencies of the alternations of each aligned pair of alternations;
   (e2.2) ascertaining (173), for each alternation of an aligned pair of alternations and for all the possible analyses of that aligned pair of phrases, respective highest frequencies of each of the alternations;
   (e2.3) ascertaining (173), for each alternation pair and for each phrase translation pair, the lower of the highest frequency in respect of the analyses of the first set of phrases and the highest frequency in respect of the analyses of the second set of phrases;
   (e2.4) repeating (173) substeps (e2.1) and (e2.2) for each remaining phrase of said set of phrases and ascertaining, for each of the alternation pairs, the sum of the associated respective lower highest frequencies; and
   (e2.5) allocating (173) to the aligned pairs of alternations a ranking in accordance with their respective sums.

4. A method as claimed in any one of claims 1 to 3, wherein the set of grammar rules generated under step (b) consists of all possible grammar rules, and wherein, for each member of the relevant set of phrases, its corresponding set of analyses consists of all possible analyses.

5. A method as claimed in any one of claims 1 to 4, wherein step (b) and step (c) are together constituted by a single step (bc) comprising the substeps:

   (bc1) parsing (173) each respective member of the relevant set of phrases with a dependency grammar chart parser having an agenda and a chart; and
   (bc2) forming (173) packed edges in the chart.

6. A method as claimed in claim 5, wherein substep (bc1) comprises the substep (bcl.1) initialising (173) the agenda with inactive edges formed from headwords identified in the respective member of the relevant set of phrases.

7. A method as claimed in claim 6, wherein substep (bc1) further comprises the substep (bc1.2) adding (173) to the agenda, for each inactive edge removed from the agenda by the operation of the chart parser, one or more active edges created using the set of grammar rules generated under step (b).

8. A method as claimed in any one of claims 1 to 4, wherein step (b) and step (c) are together constituted by a single step generating (173), by a dependency representation generator, for each member of the relevant set of phrases, a respective set of dependency representations, the dependency representations constituting said analyses.

9. Apparatus for forming a set of grammar rules for a given language, referred to as the required set of grammar rules, comprising:

   a store (171) for storing a first set of phrases in the given language and a corresponding second set of phrases in another language, the sets of phrases constituting a set of phrase translation pairs in the two languages;
   a grammar rule generator (173) for generating, in respect of a set of phrases applied to the grammar rule generator, a set of possible grammar rules in respect of that applied set of phrases;
   an analysis generator (173) arranged to use the possible grammar rules generated by the grammar rule generator for generating, for each member of a set of phrases applied to the analysis generator, a predetermined number of analyses;
   means (173) for applying the first set of phrases to the grammar rule generator and the analysis generator;
   means (173) for finding, for each of the generated analyses, the respective alternations thereof and designating each such found alternation a member of a list of potential grammar rules;
   means (173) for ranking the designated members in accordance with a predetermined criterion; and
   means (173) for repeated operation of actually or effectively transferring the current highest ranking designated member or members to an initially empty final list and then checking whether there exists, for each member of that applied set of phrases, at least one analysis corresponding to the grammar rules currently in that final list, and being arranged to cease operation upon a positive outcome of that check, the grammar rules currently in that final list being then deemed to be the required set of grammar rules.

10. Apparatus as claimed in claim 9, wherein the ranking means comprises:

   means (173) for ascertaining, for a said analysis, respective frequencies of each of the alternations thereof;
   means (173) for ascertaining, for all the possible analyses of a said phrase, respective highest frequencies of each of the alternations of those analyses;
   means (173) for summing, for all the phrases and for each of the alternations, the associated respective highest frequencies; and
   means (173) for allocating to the alternations a ranking in accordance with their respective sums.

11. Apparatus as claimed in claim 9, arranged for forming a set of bi-lingual grammar rules for the two languages, referred to as the required set of bi-lingual grammar rules, and wherein:

   the means (173) for applying is also arranged to apply the second set of phrases to the grammar rule generator and the analysis generator;
   the means (173) for finding is also arranged to find from the respective alternations produced when both sets of phrases are applied to the grammar rule generator and the analysis generator, each alternation of the respective alternations of said first set of phrases which is aligned with an alternation of the respective alternations of said second set of phrases, each such aligned pair of alternation being referred to as an alternation pair, and designating each such found alternation pair a member of a list of potential bi-lingual grammar rules; and
   the transferring and checking means (173) is also arranged for repeated operation of actually or effectively transferring the current highest ranking designated member or members of the list of potential bi-lingual grammar rules to the initially empty final list, and for checking whether there exists, for each of the phrases of each member of the set of phrase translation pairs, at least one analysis corresponding to the bi-lingual grammar rules currently in that final list, and being arranged to cease operation upon a positive outcome of that check, the grammar rules currently in that final list being then deemed to be the required set of bi-lingual grammar rules.

12. Apparatus as claimed in claim 11, wherein the ranking means comprises:

means (173) for ascertaining, for a said analysis, respective frequencies of each of the alternations thereof;
means (173) for ascertaining, for all the possible analyses of a said phrase, respective highest frequencies of each of the alternations of those analyses;
means (173) for ascertaining, for each alternation pair and for each of the translation pairs, the lower of the highest frequency in respect of the analyses of the phrases in the first language and the highest frequency in respect of the analyses of the phrases in the second language;
means (173) for summing, for all the phrases and for each of the alternations, the associated respective lower highest frequencies; and
means (173) for allocating to the alternations a ranking in accordance with their respective sums.

13. Apparatus as claimed in any one of claims 9 to 12, wherein the analysis generator (173) is a dependency grammar chart parser having an agenda and a chart and arranged to form packed edges in the chart.

14. Apparatus as claimed in claim 13, including means (173) for identifying headwords in a phrase and for initialising the agenda with inactive edges formed from headwords so identified.

15. Apparatus as claimed in claim 14, wherein the grammar rule generator (173) is arranged to add to the agenda, for each inactive edge removed from the agenda by the operation of the chart parser, one or more active edges created as if all possible grammar rules existed.

16. Apparatus as claimed in any one of claims 9 to 12, wherein the grammar rule generator (173) and the analysis generator (173) are together constituted by a dependency representation generator, the dependency representations constituting said analyses.

**Patentansprüche**

1. Verfahren zur Bildung eines Satzes Grammatikregeln für zumindest eine von einem gegebenen Paar von Sprachen, der als der erforderliche Satz Grammatikregeln bezeichnet wird, mit den Schritten:

(a) Erfassen (171) eines ersten Satzes Phrasen in einer des Sprachenpaars und eines entsprechenden zweiten Satzes Phrasen in der anderen des Sprachenpaars, wobei die Sätze von Phrasen einen Satz Phrasenübersetzungspaare in dem gegebenen Sprachenpaar bilden; und
(b) Erzeugen (173) eines jeweiligen Satzes Grammatikregeln bezüglich zumindest des ersten Satzes Phasen; wobei das Verfahren **gekennzeichnet ist durch** die Schritte:
(c) Erzeugen (173) eines jeweiligen Satzes Analysen für jedes Element des oder jedes Satzes Phrasen, für den ein Satz Grammatikregeln unter Schritt (b) erzeugt worden ist, mittels eines Analysegenerators unter Verwendung des entsprechenden erzeugten Satzes Grammatikregeln;
(d) Feststellen (173), für jede der Analysen, der jeweiligen Änderungen derselben;
(e1) wenn nur ein Satz Grammatikregeln unter Schritt (b) erzeugt worden ist, Anordnen (173) der Änderungen in einer Rangfolge nach Maßgabe eines vorgegebenen Kriteriums, wobei jede solche Änderung als Feststellungsergebnis bezeichnet wird, oder,
(e2) wenn zwei Sätze Grammatikregeln unter Schritt (b) erzeugt worden sind, Feststellen jeder Änderung der jeweiligen Änderungen des ersten Satzes Phrasen, der mit einer Änderung der jeweiligen Änderungen des zweiten Satzes Phrasen ausgerichtet ist, und Anordnen (173) des ausgerichteten Paars von Änderungen in einer Rangfolge nach Maßgabe eines vorgegebenen Kriteriums, wobei jedes solches ausgerichtete Paar von Änderungen als Feststellungsergebnis bezeichnet wird; und
(f) Erheben (173) des höchstrangigen Feststellungsergebnisses oder der höchstrangigen Feststellungsergebnisse zu einem Element oder Elementen eines Satzes ausgewählter Feststellungsergebnisse und ebenso für das nächste höchstrangige Feststellungsergebnis oder die nächsten höchstrangigen Feststellungsergebnisse, und so weiter, und Beenden (173), wenn der Satz ausgewählter, als Grammatikregeln wirkender Feststellungsergebnisse ausreichend geworden ist, so dass

für jede der Phrasen des relevanten Satzes Phrasen, wenn Schritt (e1) durchgeführt worden ist, oder

für jedes Element des Satzes von Phrasenübersetzungspaaren und für jede der Phrasen des besonderen Elements, wenn Schritt (e2) durchgeführt worden ist,

zumindest eine Analyse existiert, die dem Satz ausgewählter Feststellungsergebnisse entspricht, woraufhin die aktuelle Liste ausgewählter Feststellungsergebnisse dann als der erforderliche Satz Grammatikregeln erachtet wird.

2. Verfahren nach Anspruch 1, wobei der Rangfolgenanordnungsschritt (e1) die folgenden Unterschritte umfasst:

(e1.1) Feststellen (173), für jede Analyse einer Phrase, jeweiliger Frequenzen von jedem ihrer Feststellungsergebnisse;
(e1.2) Feststellen (173) jeweiliger höchster Frequenzen von jedem der Feststellungsergebnisse für alle Analysen der Phrase;
(e1.3) Wiederholen (173) der Unterschritte (e1.1) und (e1.2) für jede übrige Phrase des relevanten Satzes Phrasen und Feststellen der Summe der zugeordneten jeweiligen höchsten Frequenzen für jedes der Feststellungsergebnisse; und
(e1.4) Zuteilen (173) einer Rangfolgenanordnung an die Feststellungsergebnisse nach Maßgabe ihrer jeweiligen Summen.

3. Verfahren nach Anspruch 1, wobei der Rangfolgenanordnungsschritt (e2) die folgenden Unterschritte umfasst:

(e2.1) Feststellen (173), für jede Phrase eines Phrasenübersetzungspaars, jeweiliger Frequenzen der Änderungen von jedem ausgerichteten Paar von Änderungen für jede Analyse;
(e2.2) Feststellen (173), für jede Änderung eines ausgerichteten Paars von Änderungen und für alle möglichen Analysen jenes ausgerichteten Paars von Phrasen, jeweiliger höchster Frequenzen von jeder der Änderungen;
(e2.3) Feststellen (173), für jedes Änderungspaar und für jedes Phrasenübersetzungspaar, der niedrigeren der höchsten Frequenz in Bezug auf die Analysen des ersten Satzes von Phrasen und der höchsten Frequenz in Bezug auf die Analysen des zweiten Satzes von Phrasen;
(e2.4) Wiederholen (173) der Unterschritte (e2.1) und (e2.2) für jede übrige Phrase des Satzes von Phrasen und Feststellen der Summe der zugeordneten jeweiligen niedrigeren höchsten Frequenzen für jedes der Änderungspaare; und
(e2.5) Zuteilen (173) einer Rangfolgenanordnung an die ausgerichteten Paare von Änderungen nach Maßgabe ihrer jeweiligen Summen.

4. Verfahren nach irgendeinem der Ansprüche 1 bis 3, wobei der unter Schritt (b) erzeugte Satz Grammatikregeln aus allen möglichen Grammatikregeln besteht und wobei für jedes Element des relevanten Satzes Phrasen sein entsprechender Satz Analysen aus allen möglichen Analysen besteht.

5. Verfahren nach irgendeinem der Ansprüche 1 bis 4, wobei Schritt (b) und Schritt (c) zusammen von einem einzigen Schritt (bc) mit den folgenden Unterschritten gebildet werden:

(bc1) Syntaktisches Analysieren (173) jedes jeweiligen Elements des relevanten Satzes Phrasen mit einem Abhängigkeits-Grammatikdiagrammparser mit einer Agenda und einem Diagramm; und
(bc2) Bilden (173) von komprimierten Kanten im Diagramm.

6. Verfahren nach Anspruch 5, wobei der Unterschritt (bc1) den Unterschritt (bc1.1) umfasst, der die Agenda mit inaktiven Kanten initialisiert (173), die aus Stichwörtern gebildet werden, die in dem jeweiligen Element des relevanten Satzes Phrasen identifiziert werden.

7. Verfahren nach Anspruch 6, wobei der Unterschritt (bc1) weiterhin den Unterschritt (bc1.2) umfasst, der zur Agenda für jede inaktive Kante, die aus der Agenda durch die Betätigung des Diagrammparsers entfernt wird, eine oder mehrere aktive Kanten addiert (173), die unter Verwendung des unter Schritt (b) erzeugten Satzes Grammatikregeln erschaffen werden.

8. Verfahren nach irgendeinem der Ansprüche 1 bis 4, wobei Schritt (b) und Schritt (c) zusammen von einem einzigen Schritt gebildet werden, der durch einen Abhängigkeitsdarstellungsgenerator für jedes Element des relevanten Satzes Phrasen einen jeweiligen Satz Abhängigkeitsdarstellungen erzeugt (173), wobei die Abhängigkeitsdarstellungen die Analysen bilden.

**9.** Vorrichtung zur Bildung eines Satzes Grammatikregeln für eine gegebene Sprache, der als der erforderliche Satz Grammatikregeln bezeichnet wird, mit:

einem Speicher (171) zum Speichern eines ersten Satzes Phrasen in der gegebenen Sprache und eines entsprechenden zweiten Satzes Phrasen in einer anderen Sprache, wobei die Sätze von Phrasen einen Satz Phrasenübersetzungspaare in den beiden Sprachen bilden;

einem Grammatikregelgenerator (173) zum Erzeugen, in Bezug auf einen auf den Grammatikregelgenerator angewendeten Satz Phrasen, eines Satzes möglicher Grammatikregeln in Bezug auf jenen angewendeten Satz Phrasen;

einem Analysengenerator (173), der angeordnet ist, um die möglichen Grammatikregeln, die von dem Grammatikregelgenerator erzeugt worden sind, zu verwenden, um für jedes Element eines auf den Analysengenerator angewendeten Satzes Phrasen eine vorgegebene Anzahl Analysen zu erzeugen;

einer Einrichtung (173) zum Anwenden des ersten Satzes Phrasen auf den Grammatikregelgenerator und den Analysengenerator;

einer Einrichtung (173) zum Finden, für jede der erzeugten Analysen, ihrer jeweiligen Änderungen und Bezeichnen jeder solchen gefundenen Änderung als ein Element einer Liste von möglichen Grammatikregeln;

einer Einrichtung (173) zum Anordnen der bezeichneten Elemente in einer Rangfolge nach Maßgabe eines vorgegebenen Kriteriums; und

einer Einrichtung (173) zur wiederholten Betätigung des tatsächlichen oder wirksamen Übertragens des aktuellen höchstrangigen bezeichneten Elements oder der aktuellen höchstrangigen bezeichneten Elemente an eine anfänglich leere Endliste und zur anschließenden Überprüfung, ob für jedes Element jenes angewendeten Satzes Phrasen zumindest eine Analyse existiert, die den in jener Endliste aktuell befindlichen Grammatikregeln entspricht, und zum Angeordnetwerden, um die Betätigung bei einem positiven Ergebnis jener Überprüfung zu beenden, wobei die in jener Endliste aktuell befindlichen Grammatikregeln dann als der erforderliche Satz Grammatikregeln erachtet werden.

**10.** Vorrichtung nach Anspruch 9, wobei die Rangfolgenanordnungseinrichtung Folgendes umfasst:

eine Einrichtung (173) zum Feststellen, für eine Analyse, jeweiliger Frequenzen von jeder ihrer Änderungen;

eine Einrichtung (173) zum Feststellen, für alle möglichen Analysen einer Phrase, jeweiliger höchster Frequenzen für jede der Änderungen jener Analysen;

eine Einrichtung (173) zum Zusammenzählen der zugeordneten jeweiligen höchsten Frequenzen für alle Phrasen und für jede der Änderungen; und

eine Einrichtung (173) zum Zuteilen einer Rangfolgenanordnung an die Änderungen nach Maßgabe ihrer jeweiligen Summen.

**11.** Vorrichtung nach Anspruch 9, welche angeordnet ist, um einen Satz zweisprachiger Grammatikregeln für die beiden Sprachen zu bilden, der als der erforderliche Satz zweisprachiger Grammatikregeln bezeichnet wird, und wobei:

die Einrichtung (173) zur Anwendung ebenfalls angeordnet ist, um den zweiten Satz Phrasen auf den Grammatikregelgenerator und den Analysegenerator anzuwenden;

die Einrichtung (173) zum Finden ebenfalls angeordnet ist, um aus den jeweiligen Änderungen, welche erzeugt werden, wenn beide Sätze von Phrasen auf den Grammatikregelgenerator und den Analysegenerator angewendet werden, jede Änderung der jeweiligen Änderungen des ersten Satzes Phrasen zu finden, die mit einer Änderung der jeweiligen Änderungen des zweiten Satzes Phrasen ausgerichtet ist, wobei jedes solches ausgerichtetes Paar von Änderungen als Änderungspaar bezeichnet wird, und Bezeichnen jedes solchen gefundenen Änderungspaars als ein Element einer Liste von möglichen zweisprachigen Grammatikregeln; und

die Übertragungs- und Prüfeinrichtung (173) ebenfalls angeordnet ist für eine wiederholte Betätigung des tatsächlichen oder wirksamen Übertragens des aktuellen höchstrangigen bezeichneten Elements oder der aktuellen höchstrangigen bezeichneten Elemente der Liste von möglichen zweisprachigen Grammatikregeln an die anfänglich leere Endliste und zur Überprüfung, ob für jede der Phrasen jedes Elements des Satzes von Phrasenübersetzungspaaren zumindest eine Analyse existiert, die den aktuell in jener Endliste befindlichen zweisprachigen Grammatikregeln entspricht, und zum Angeordnetwerden, um die Betätigung bei einem positiven Ergebnis jener Prüfung zu beenden, wobei die aktuell in jener Endliste befindlichen Grammatikregeln dann als der erforderliche Satz zweisprachiger Grammatikregeln erachtet werden.

**12.** Vorrichtung nach Anspruch 11, wobei die Rangfolgenanordnungseinrichtung Folgendes umfasst:

eine Einrichtung (173) zum Feststellen, für eine Analyse, jeweiliger Frequenzen von jeder ihrer Änderungen;
eine Einrichtung (173) zum Feststellen, für alle möglichen Analysen einer Phrase, jeweiliger höchster Frequenzen für jede der Änderungen jener Analysen;
eine Einrichtung (173) zum Feststellen, für jedes Änderungspaar und für jedes der Übersetzungspaare, der niedrigeren der höchsten Frequenz in Bezug auf die Analysen der Phrasen in der ersten Sprache und der höchsten Frequenz in Bezug auf die Analysen der Phrasen in der zweiten Sprache;
eine Einrichtung (173) zum Zusammenzählen der zugeordneten jeweiligen niedrigeren höchsten Frequenzen für alle Phrasen und für jede der Änderungen; und
eine Einrichtung (173) zum Zuteilen einer Rangfolgenanordnung an die Änderungen nach Maßgabe ihrer jeweiligen Summen.

**13.** Vorrichtung nach irgendeinem der Ansprüche 9 bis 12, wobei der Analysengenerator (173) ein Abhängigkeits-Grammatikdiagrammparser mit einer Agenda und einem Diagramm ist und angeordnet ist, um komprimierte Kanten im Diagramm zu bilden.

**14.** Vorrichtung nach Anspruch 13, einschließlich Einrichtungen (173) zum Identifizieren von Stichwörtern in einer Phrase und zum Initialisieren der Agenda mit inaktiven Kanten, die aus solchermaßen identifizierten Stichwörtern gebildet sind.

**15.** Vorrichtung nach Anspruch 14, wobei der Grammatikregelgenerator (173) angeordnet ist, um zur Agenda für jede inaktive Kante, die aus der Agenda durch die Betätigung des Diagrammparsers entfernt wird, eine oder mehrere aktive Kanten zu addieren, die geschaffen sind, als ob alle möglichen Grammatikregeln existierten.

**16.** Vorrichtung nach irgendeinem der Ansprüche 9 bis 12, wobei der Grammatikregelgenerator (173) und der Analysengenerator (173) zusammen von einem Abhängigkeitsdarstellungsgenerator gebildet werden, wobei die Abhängigkeitsdarstellungen die Analysen bilden.

**Revendications**

**1.** Procédé de formation d'un ensemble de règles grammaticales pour au moins l'une d'une paire donnée de langues, appelé ensemble nécessaire de règles grammaticales, comprenant les étapes consistant à :

(a) acquérir (171) un premier ensemble de phrases dans l'une de la paire de langues et un deuxième ensemble correspondant de phrases dans l'autre de la paire de langues, les ensembles de phrases constituant un ensemble de paires de traductions de phrases dans la paire donnée de langues ; et
(b) générer (173) un ensemble respectif de règles grammaticales en relation avec au moins le premier ensemble de phrases ;

le procédé étant **caractérisé par** les étapes consistant à :

(c) générer (173), pour chaque élément de l'ensemble ou de chaque ensemble de phrases pour lequel un ensemble de règles grammaticales a été généré à l'étape (b), en utilisant un générateur d'analyses utilisant l'ensemble généré correspondant de règles grammaticales, un ensemble respectif d'analyses ;
(d) vérifier (173), pour chacune des analyses, les alternances *(alternations)* respectives de celles-ci ;
(e1) si un seul ensemble de règles grammaticales a été généré à l'étape (b), classer (173) les alternances selon un critère prédéterminé, chacune de ces alternances étant appelée résultat de vérification, ou
(e2) si deux ensembles de règles grammaticales ont été générés à l'étape (b), vérifier chaque alternance des alternances respectives dudit premier ensemble de phrases qui est alignée avec une alternance des alternances respectives dudit deuxième ensemble de phrases, et classer (173) la paire d'alternances alignées selon un critère prédéterminé, chaque telle paire d'alternances alignées étant appelée résultat de vérification ; et
(f) faire (173) du résultat de vérification ou des résultats de vérification de classement le ou les plus élevés un élément ou des éléments d'un ensemble de résultats de vérification sélectionnés, et de manière similaire pour le résultat de vérification ou les résultats de vérification de classement le ou les plus élevés suivants, et ainsi de suite, et cesser (173) lorsque l'ensemble de résultats de vérification sélectionnés agissant en tant que règles grammaticales est devenu suffisant de sorte que

pour chacune des phrases de l'ensemble pertinent de phrases, si l'étape (e1) a été effectuée, ou
pour chaque élément de l'ensemble de paires de traductions de phrases, et pour chacune des phrases de l'élément particulier, si l'étape (e2) a été effectuée,
il existe au moins une analyse correspondant à l'ensemble de résultats de vérification sélectionnés, sur quoi il est alors jugé que la liste actuelle de résultats de vérification sélectionnés est l'ensemble nécessaire de règles grammaticales.

2. Procédé selon la revendication 1, dans lequel l'étape de classement (e1) comprend les sous-étapes consistant à :

   (e1.1) vérifier (173), pour chaque analyse pour une dite phrase, les fréquences respectives de chacun de ses résultats de vérification ;
   (e1.2) vérifier (173), pour toutes lesdites analyses de la ladite phrase, les fréquences les plus élevées respectives de chacun des résultats de vérification ;
   (e1.3) répéter (173) les sous-étapes (e1.1) et (e1.2) pour chaque phrase restante de l'ensemble pertinent de phrases et vérifier, pour chacun des résultats de vérification, la somme des fréquences les plus élevées respectives associées ; et
   (e1.4) attribuer (173) aux résultats de vérification un classement en fonction de leurs sommes respectives.

3. Procédé selon la revendication 1, dans lequel l'étape de classement (e2) comprend les sous-étapes consistant à :

   (e2.1) vérifier (173), pour chaque analyse pour chaque phrase d'une paire de traductions de phrases, les fréquences respectives des alternances de chaque paire d'alternances alignées ;
   (e2.2) vérifier (173), pour chaque alternance d'une paire d'alternances alignées et pour toutes les analyses possibles de cette paire de phrases alignées, les fréquences les plus élevées respectives de chacune des alternances ;
   (e2.3) vérifier (173), pour chaque paire d'alternances et pour chaque paire de traductions de phrases, la plus faible de la fréquence la plus élevée en ce qui concerne les analyses du premier ensemble de phrases et de la fréquence la plus élevée en ce qui concerne les analyses du deuxième ensemble de phrases ;
   (e2.4) répéter (173) les sous-étapes (e2.1) et (e2.2) pour chaque phrase restante dudit ensemble de phrases et vérifier, pour chacune des paires d'alternances, la somme des plus faibles des fréquences les plus élevées respectives associées ; et
   (e2.5) attribuer (173) aux paires d'alternances alignées un classement en fonction de leurs sommes respectives.

4. Procédé selon l'une quelconque des revendications 1 à 3, dans lequel l'ensemble de règles grammaticales généré à l'étape (b) consiste en toutes les règles grammaticales possibles, et dans lequel, pour chaque élément de l'ensemble pertinent de phrases, son ensemble correspondant d'analyses consiste en toutes les analyses possibles.

5. Procédé selon l'une quelconque des revendications 1 à 4, dans lequel l'étape (b) et l'étape (c) sont constituées ensemble par une étape unique (bc) comprenant les sous-étapes consistant à :

   (bc1) analyser syntaxiquement (173) chaque élément respectif de l'ensemble pertinent de phrases par un analyseur de graphe grammatical des dépendances comportant un agenda et un graphe ; et
   (bc2) former (173) des arcs *(edges)* groupés dans le graphe.

6. Procédé selon la revendication 5, dans lequel la sous-étape (bc1) comprend la sous-étape (bc1.1) initialisant (173) l'agenda avec des arcs inactifs formés à partir de mots-vedettes *(headwords)* identifiés dans l'élément respectif de l'ensemble pertinent de phrases.

7. Procédé selon la revendication 6, dans lequel la sous-étape (bc1) comprend en outre la sous-étape (bc1.2) ajoutant (173) à l'agenda, pour chaque arc inactif retiré de l'agenda par l'opération de l'analyseur de graphe, un ou plusieurs arcs actifs créés en utilisant l'ensemble de règles grammaticales généré à l'étape (b).

8. Procédé selon l'une quelconque des revendications 1 à 4, dans lequel l'étape (b) et l'étape (c) sont constituées ensemble par une étape unique générant (173), par un générateur de représentations de dépendances, pour chaque élément de l'ensemble pertinent de phrases, un ensemble respectif de représentations de dépendances, les représentations de dépendances constituant lesdites analyses.

9. Dispositif pour former un ensemble de règles grammaticales pour une langue donnée, appelé ensemble nécessaire de règles grammaticales, comprenant :

une mémoire (171) pour mémoriser un premier ensemble de phrases dans la langue donnée et un deuxième ensemble correspondant de phrases dans une autre langue, les ensembles de phrases constituant un ensemble de paires de traductions de phrases dans les deux langues ;

un générateur de règles grammaticales (173) pour générer, en relation avec un ensemble de phrases appliqué au générateur de règles grammaticales, un ensemble de règles grammaticales possibles en ce qui concerne cet ensemble appliqué de phrases ;

un générateur d'analyses (173) agencé pour utiliser les règles grammaticales possibles générées par le générateur de règles grammaticales pour générer, pour chaque élément d'un ensemble de phrases appliqué au générateur d'analyses, un nombre prédéterminé d'analyses ;

des moyens (173) pour appliquer le premier ensemble de phrases au générateur de règles grammaticales et au générateur d'analyses ;

des moyens (173) pour trouver, pour chacune des analyses générées, les alternances respectives de celles-ci et pour désigner chacune de ces alternances trouvées en tant qu'élément d'une liste de règles grammaticales potentielles ;

des moyens (173) pour classer les éléments désignés selon un critère prédéterminé ; et

des moyens (173) pour répéter une opération de transfert réel ou effectif de l'élément ou des éléments désignés de classement le ou les plus élevés actuels à une liste finale initialement vide et vérifier ensuite s'il existe, pour chaque élément de cet ensemble appliqué de phrases, au moins une analyse correspondant aux règles grammaticales actuellement dans cette liste finale, et agencés pour cesser l'opération lors d'un résultat positif de cette vérification, les règles grammaticales actuellement dans cette liste finale étant alors jugées comme étant l'ensemble nécessaire de règles grammaticales.

10. Dispositif selon la revendication 9, dans lequel les moyens de classement comprennent :

des moyens (173) pour vérifier, pour une dite analyse, les fréquences respectives de chacune des alternances de celle-ci ;

des moyens (173) pour vérifier, pour toutes les analyses possibles d'une dite phrase, les fréquences les plus élevées respectives de chacune des alternances de ces analyses ;

des moyens (173) pour sommer, pour toutes les phrases et pour chacune des alternances, les fréquences les plus élevées respectives associées ; et

des moyens (173) pour attribuer aux alternances un classement en fonction de leurs sommes respectives.

11. Dispositif selon la revendication 9, agencé pour former un ensemble de règles grammaticales bilingues pour les deux langues, appelé ensemble nécessaire de règles grammaticales bilingues, et dans lequel :

les moyens (173) pour appliquer sont également agencés pour appliquer le deuxième ensemble de phrases au générateur de règles grammaticales et au générateur d'analyses ;

les moyens (173) pour trouver sont également agencés pour trouver, à partir des alternances respectives produites lorsque les deux ensembles de phrases sont appliqués au générateur de règles grammaticales et au générateur d'analyses, chaque alternance des alternances respectives dudit premier ensemble de phrases qui est alignée avec une alternance des alternances respectives dudit deuxième ensemble de phrases, chaque telle paire d'alternances alignées étant appelée paire d'alternances, et désigner chaque telle paire d'alternances trouvée en tant qu'élément d'une liste de règles grammaticales bilingues potentielles ; et

les moyens de transfert et de vérification (173) sont également agencés pour répéter une opération de transfert réel ou effectif de l'élément ou des éléments désignés de classement le ou les plus élevés actuels de la liste de règles grammaticales bilingues potentielles à la liste finale initialement vide, et pour vérifier s'il existe, pour chacune des phrases de chaque élément de l'ensemble de paires de traductions de phrases, au moins une analyse correspondant aux règles grammaticales bilingues actuellement dans cette liste finale, et agencés pour cesser l'opération lors d'un résultat positif de cette vérification, les règles grammaticales actuellement dans cette liste finale étant alors jugées comme étant l'ensemble nécessaire de règles grammaticales bilingues.

12. Dispositif selon la revendication 11, dans lequel les moyens de classement comprennent :

des moyens (173) pour vérifier, pour une dite analyse, les fréquences respectives de chacune des alternances de celle-ci ;

des moyens (173) pour vérifier, pour toutes les analyses possibles d'une dite phrase, les fréquences les plus élevées respectives de chacune des alternances de ces analyses ;

des moyens (173) pour vérifier, pour chaque paire d'alternances et pour chacune des paires de traductions, la plus faible de la fréquence la plus élevée en ce qui concerne les analyses des phrases dans la première langue et de la fréquence la plus élevée en ce qui concerne les analyses des phrases dans la deuxième langue ;

des moyens (173) pour sommer, pour toutes les phrases et pour chacune des alternances, les plus faibles des fréquences les plus élevées respectives associées ; et

des moyens (173) pour attribuer aux alternances un classement en fonction de leurs sommes respectives.

**13.** Dispositif selon l'une quelconque des revendications 9 à 12, dans lequel le générateur d'analyses (173) est un analyseur de graphe grammatical de dépendances comportant un agenda et un graphe et agencé pour former des arcs groupés dans le graphe.

**14.** Dispositif selon la revendication 13, comprenant des moyens (173) pour identifier des mots-vedettes dans une phrase et pour initialiser l'agenda avec des arcs inactifs formés à partir des mots-vedettes ainsi identifiés.

**15.** Dispositif selon la revendication 14, dans lequel le générateur de règles grammaticales (173) est agencé pour ajouter à l'agenda, pour chaque arc inactif retiré de l'agenda par l'opération de l'analyseur de graphe, un ou plusieurs arcs actifs créés comme si toutes les règles grammaticales possibles existaient.

**16.** Dispositif selon l'une quelconque des revendications 9 à 12, dans lequel le générateur de règles grammaticales (173) et le générateur d'analyses (173) sont constitués ensemble par un générateur de représentations de dépendances, les représentations de dépendances constituant lesdites analyses.

Fig. 1

Fig. 2

Fig.3

Fig.4

Fig.5

Fig.6

Fig.7

Fig.8

Fig.9

Fig.10

Fig.11

Fig.12

Fig.13

Fig.14

Fig.15

Fig.16

Fig.17

Fig.18

Fig.19

Fig.20

Fig.21

Fig.22

Fig.23

Fig.24

Fig.25

Fig.26

Fig.27

Fig.28

Fig.29

Fig.30

Fig.31

Fig.32

Fig.33

Fig.34

Fig.35

Fig.36

Fig.37

Fig.38

Fig.39

Fig.40

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H Somers.** Review Article: Example-based Machine Translation. *Machine Translation,* 1999, vol. 14 (2), 113-157
- **S Sato ; M Nagao.** Toward Memory-based Translation. *Proceedings of 13th International Conference on Computational Linguistics,* 1990, 247-252
- **H A Guvenir ; I Cicekli.** Learning Translation Templates from Examples. *Information Systems,* 1998, vol. 23 (6), 353-363
- **K McTait ; A Trujillo.** A Language-Neutral Sparse-Data Algorithm for Extracting Translation Patterns. *Proceedings of the 8th International Conference on Theoretical and Methodological Issues in Machine Translation, TMI-99,* 98-108
- **A Poutsma.** Data-Oriented Translation. *Proceedings of 9th meeting of Computational Linguistics in the Netherlands,* 1998
- **R. Bod ; R. Scha.** Data-Oriented Language Processing: An Overview. *(ILLC Research Report LP-96-13), Institute for Logic, Language and Computation,* 1996
- **K Takeda.** Pattern-Based Context-Free Grammars for Machine Translation. *Proceedings of the 34th Annual Meeting of the Association for Computational Linguistics,* 1996
- **F Pereira.** Extraposition Grammars. *American Journal of Computational Linguistics,* 1981, vol. 7 (4), 243-256
- **G Gazdar ; E Klein ; G K Pullum ; I A Sag.** Generalised Phrase Structure Grammar. Harvard University Press, 1985
- **C Pollard ; I A Sag.** Head-Driven Phrase Structure Grammar. The University of Chicago Press, 1994
- **T Mitchell.** Machine Learning. McGraw-Hill International Editions, 1997
- **H Li ; N Abe.** Generalizing Case Frames Using a Thesaurus and the MDL Principle. *Computational Linguistics,* vol. 24 (2), 217-244
- **H Li ; N Abe.** Learning Dependencies between Case Frame Slots. *Computational Linguistics,* vol. 25 (2), 292-303
- **Gerald Gazdar ; Chris Mellish.** Natural Language Processing in Lisp. Addison Wesley, 1989